# EUROPEAN PATENT SPECIFICATION

(11) **EP 2 970 533 B1**
(45) Date of publication and mention of the grant of the patent: **19.07.2023**
(21) Application number: 14724814.0
(22) Date of filing: 11.03.2014
(51) Int. Cl.: C08F 210/14, C10M 145/08, C08F 20/68

(54) **LUBRICANT COMPOSITIONS INCLUDING ALPHA-OLEFIN COPOLYMERS**
SCHMIERMITTELZUSAMMENSETZUNGEN MIT ALPHA-OLEFIN-COPOLYMEREN
COMPOSITIONS DE LUBRIFIANT INCLUANT DES COPOLYMÈRES D'ALPHA-OLÉPHINE

(30) Priority: 14.03.2013 US 201361783083 P
(43) Date of publication of application: 20.01.2016
(73) Proprietor: Wilmar Trading Pte Ltd, Singapore 088830 (SG)
(72) Inventor: TINDALL, Debra, Pendleton, SC 29670 (US); HATEGAN, Georgeta, Woodridge, IL 60517 (US); RIZVI, Syed, Q., Woodridge, IL 60517 (US)
(74) Representative: Murgitroyd & Company
(86) International application number: PCT/US2014/023044
(87) International publication number: WO 2014/159326

(56) References cited:
- WO-A2-2012/129479

## Description

### BACKGROUND

Lubricants are compositions that reduce friction between surfaces. In addition to allowing freedom of motion between two surfaces and reducing mechanical wear of the surfaces, a lubricant also may inhibit corrosion of the surfaces and/or may inhibit damage to the surfaces due to heat or oxidation. Examples of lubricant compositions include, but are not limited to, motor oils, transmission fluids, gear oils, industrial lubricating oils, and metalworking oils.

A typical lubricant composition includes a base oil and optionally one or more additives. Conventional base oils are hydrocarbons, such as mineral oils. A wide variety of additives may be combined with the base oil, depending on the intended use of the lubricant. Examples of lubricant additives include, but are not limited to, oxidation inhibitors, corrosion inhibitors, dispersing agents, high pressure additives, anti-foaming agents and metal deactivators.

The physical and chemical properties of a lubricant are affected by the chemical structures of the various components of the lubricant, the relative amounts of the components in the lubricant, and the processing techniques used to form the lubricant. For example, the chemical structure of the base oil may determine overall ranges of physical and chemical properties of the lubricant, with the specific properties being affected by the other components of the lubricant composition and/or the manner in which the lubricant composition is prepared. Alteration of the chemical structure of the base oil can allow for modification of the overall range of properties of a lubricant containing the base oil.

One potential approach to altering the chemical structure of a lubricant component, including the chemical structure of a base oil, is to form the component from a renewable feedstock. Renewable feedstocks, such as fatty acids or fatty esters derived from natural oils, have opened new possibilities for the development of a variety of industrially useful substances, including lubricants. For example, renewable feedstocks can be used to prepare lubricants having combinations of properties that were not available with conventional petroleum feedstocks. In another example, renewable feedstocks can be used to prepare lubricants more efficiently, without requiring undesirable reagents or solvents, and/or with decreased amounts of waste or side products.

It would be desirable to provide lubricant compositions that include components having new chemical structures. Preferably such compositions can provide acceptable lubricant performance, while having an increased concentration of components formed from renewable feedstocks. Preferably such compositions can provide useful combinations of lubricant properties that are difficult to obtain using only conventional petroleum feedstocks.

### SUMMARY

The scope of the present invention is defined solely by the appended claims.

A lubricant composition is provided that includes a copolymer including constitutional units formed from monomers including an alpha-olefin and an α-ester-alk-ω-ene molecule. The composition has a kinematic viscosity at 100 °C of at most 20 centistokes (milliPascal second)s.

### BRIEF DESCRIPTION OF THE DRAWINGS

The invention can be better understood with reference to the following drawings and description. The following description includes examples for reference purposes which are not in accordance with the claimed invention but serve for comparison purposes.
FIG. 1 represents a method of making a lubricant composition.
FIG. 2 depicts a representative reaction scheme for a method of forming a copolymer.
FIG. 3 depicts graphs of copolymer molecular weights and of polydispersity indices (PDI) as a function of di-*t*-amyl peroxide initiator loading.
FIG. 4 depicts graphs of copolymer yield and of kinematic viscosity (KV) at 100 °C as a function of di-*t*-amyl peroxide initiator loading.
FIG. 5 depicts graphs of copolymer yield and of kinematic viscosity (KV) at 100 °C as a function of di-*t*-butyl peroxide initiator loading.
FIG. 6 depicts graphs of copolymer yield and of kinematic viscosity (KV) at 100 °C as a function of 9-DAME loading.
FIG. 7 depicts a graph of copolymer viscosity as a function of reaction yield for copolymerizations conducted with and without a chain transfer agent.
FIG. 8 depicts a graph of copolymer viscosity as a function of di-t-butyl peroxide initiator loading at reaction temperatures of 155 °C and 165 °C.

### DETAILED DESCRIPTION

The term "metathesis catalyst" refers to any catalyst or catalyst system configured to catalyze a metathesis reaction.

The terms "metathesize" and "metathesizing" refer to a chemical reaction involving a single type of olefin or a plurality of different types of olefin, which is conducted in the presence of a metathesis catalyst, and which results in the formation of at least one new olefin product. The phrase "metathesis reaction" encompasses cross-metathesis (a.k.a. co-metathesis), self-metathesis, ring-opening metathesis (ROM), ring-opening metathesis polymerizations (ROMP), ring-closing metathesis (RCM), and acyclic diene metathesis (ADMET), and combinations thereof.

The terms "natural oils," "natural feedstocks," or "natural oil feedstocks" mean oils derived from plants or animal sources. The term "natural oil" includes natural oil derivatives, unless otherwise indicated. The terms also include modified plant or animal sources (e.g., genetically modified plant or animal sources), unless indicated otherwise. Examples of natural oils include but are not limited to vegetable oils, algal oils, animal fats, tall oils, derivatives of these oils, combinations of any of these oils, and the like. Examples of vegetable oils include but are not limited to canola oil, rapeseed oil, coconut oil, corn oil, cottonseed oil, olive oil, palm oil, peanut oil, safflower oil, sesame oil, soybean oil, sunflower oil, linseed oil, palm kernel oil, tung oil, jatropha oil, mustard oil, camelina oil, pennycress oil, castor oil, and the like, and combinations thereof. Examples of animal fats include but are not limited to lard, tallow, poultry fat, yellow grease, fish oil, and the like, and combinations thereof. Tall oils are by-products of wood pulp manufacture. A natural oil may be refined, bleached, and/or deodorized.

The term "natural oil derivatives" refers to compounds or mixtures of compounds derived from one or more natural oils using any one or combination of methods known in the art. Such methods include but are not limited to saponification, transesterification, esterification, hydrogenation (partial or full), isomerization, oxidation, reduction, and the like, and combinations thereof. Examples of natural oil derivatives include but are not limited to gums, phospholipids, soapstock, acidulated soapstock, distillate or distillate sludge, fatty acids such as oleic acid, fatty acid alkyl esters such as methyl oleate and 2-ethylhexyl ester, hydroxy-substituted variations of the natural oil, and the like, and combinations thereof. For example, the natural oil derivative may be a fatty acid methyl ester (FAME) derived from the glyceride of the natural oil.

The term "metathesized natural oil" refers to the metathesis reaction product of a natural oil in the presence of a metathesis catalyst, where the metathesis product includes a new olefinic compound. A metathesized natural oil may include a reaction product of two triglycerides in a natural feedstock (self-metathesis) in the presence of a metathesis catalyst, where each triglyceride has an unsaturated carbon-carbon double bond, and where the reaction product includes a "natural oil oligomer" having a new mixture of olefins and esters that may include one or more of metathesis monomers, metathesis dimers, metathesis trimers, metathesis tetramers, metathesis pentamers, and higher order metathesis oligomers (e.g., metathesis hexamers). A metathesized natural oil may include a metathesis reaction product of a natural oil that includes more than one source of natural oil (e.g., a mixture of soybean oil and palm oil). A metathesized natural oil may include a metathesis reaction product of a natural oil that includes a mixture of natural oils and natural oil derivatives. A metathesized natural oil may include a cross-metathesis reaction product of a natural oil with another substance having a carbon-carbon double bond, such as an olefin or ethylene.

A lubricant composition may be formed from a renewable feedstock, such as a renewable feedstock formed through metathesis reactions of natural oils and/or their fatty acid or fatty ester derivatives. When compounds containing a carbon-carbon double bond undergo metathesis reactions in the presence of a metathesis catalyst, some or all of the original carbon-carbon double bonds are broken, and new carbon-carbon double bonds are formed. The products of such metathesis reactions include carbon-carbon double bonds in different locations, which can provide unsaturated organic compounds having useful chemical structures.

Renewable feedstocks for lubricants may include unsaturated compounds having a polymerizable carbon-carbon double bond. These unsaturated compounds may be used as monomers or as comonomers in polymerization reactions, to provide higher molecular weight substances that can be used as a lubricant base oil or additive. The unsaturated compounds may be polymerized alone to form homopolymers, or they may be polymerized with other comonomers to form copolymers. Other comonomers may include substances formed from conventional petrochemical feedstocks.

A lubricant composition may include a copolymer including constitutional units formed from an alpha-olefin monomer and an α-ester-alk-ω-ene monomer, where the α-ester-alk-ω-ene monomer is derived from a metathesized natural oil. The use of a monomer containing a metathesized natural oil derivative can provide additional options for preparing lubricant compositions having useful combinations of properties, including but not limited to low viscosity, high viscosity, viscosity that can be varied from low to high, oxidative stability, thermal stability, and hydrolytic stability. The use of a monomer containing a metathesized natural oil derivative also may provide certain advantages over commercial lubricants, including but not limited to simpler and/or more cost-effective production, reduced variability, improved sourcing, and increased biorenewability.

A lubricant composition includes a copolymer including constitutional units formed from monomers, including a first monomer that is an alpha-olefin, and a second monomer that is an α-ester-alk-ω-ene molecule. Preferably the lubricant composition has a kinematic viscosity at 100 °C of at most 20 centistokes (cSt. The lubricant composition may be a low-viscosity composition having a kinematic viscosity at 100 °C of at most 20 cSt, including from 5 to 20 cSt and from 10 to 15 cSt..

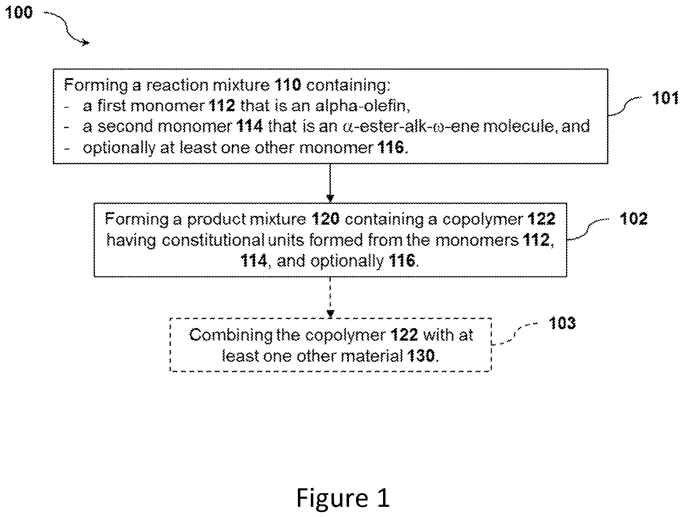

FIG. 1 represents a method **100** of making a lubricant composition. The method **100** includes forming **101** a reaction mixture **110** containing a first monomer **112** that is an alpha-olefin, a second monomer **114** that is an α-ester-alk-ω-ene molecule, and optionally at least one other monomer **116;** forming **102** a product mixture **120** containing a copolymer **122** having constitutional units formed from the monomers **112**, **114** and optionally **116;** and optionally combining **103** the copolymer **122** with at least one other material **130.**

The alpha-olefin monomer **112** may include any hydrocarbon having a chain of at least 3 carbon atoms and an alkenyl group positioned at the end of the chain. The alpha-olefin monomer may be represented by the structure H₂C=C(R¹)(R²), where R¹ is a first hydrocarbon group, and R² is either hydrogen or a second hydrocarbon group. When R¹ and R² are each a hydrocarbon group, R¹ and R² may be the same or they may be different. If R¹ and/or R² include 3 or more carbon atoms, R¹ and R² independently may include a straight chain of the carbon atoms or may include a branched chain.

Examples of mono-substituted alpha-olefin monomers, in which R² is hydrogen, include but are not limited to linear alpha-olefins such as propene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene and 1-eicosene. Examples of mono-substituted alpha-olefin monomers include but are not limited to branched alpha-olefins such as substituted derivatives of 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene or 1-eicosene, where the substituted derivative is substituted at a saturated carbon with one or more hydrocarbon groups having from one to 10 carbon atoms.

Examples of di-substituted alpha-olefin monomers, in which R² is a hydrocarbon group, include but are not limited to isobutylene, 2-methylbut-1-ene, 2-methylpent-1-ene, 2-methylhex-1-ene, 2-methylhept-1-ene, 2-methyloct-1-ene, and the like; 2-ethylbut-1-ene, 2-ethylpent-1-ene, 2-ethylhex-1-ene, 2-ethylhept-1-ene, 2-ethyloct-1-ene, and the like; 2-propylpent-1-ene, 2-propylhex-1-ene, 2-propylhept-1-ene, 2-propyloct-1-ene, and the like; and 2-butylhex-1-ene, 2-butylhept-1-ene, 2-butyloct-1-ene, and the like.

The α-ester-alk-ω-ene monomer **114** has the chemical formula R³-O-C(=O)-(R⁴)-CH=CH₂, where R³ is a alkyl group having from 1 to 5 carbon atoms, and R⁴ is an alkyl group having from 2 to 20 carbon atoms. Examples of α-ester-alk-ω-ene molecules include but are not limited to 9-decenoic acid methyl ester, 9-decenoic acid ethyl ester, 9-decenoic acid propyl ester, 9-decenoic acid butyl ester, 9-decenoic acid pentyl ester, 10-undecenoic acid methyl ester, 10-undecenoic acid ethyl ester, 10-undecenoic acid propyl ester, 11-dodecenoic acid methyl ester, 11-dodecenoic acid ethyl ester, and 11-dodecenoic acid propyl ester.

The α-ester-alk-ω-ene monomer **114** may be the product of a metathesis reaction of a natural oil, a natural oil derivative or a metathesized natural oil in the presence of a metathesis catalyst. The metathesis catalyst in this reaction may include any catalyst or catalyst system that catalyzes a metathesis reaction. Any known metathesis catalyst may be used, alone or in combination with one or more additional catalysts. Examples of metathesis catalysts and process conditions are described in paragraphs [0069] - [0155] of US 2011/0160472. A number of the metathesis catalysts described in US 2011/0160472 are presently available from Materia, Inc. (Pasadena, Calif.).

TheA metathesis catalyst may include a transition metal such asThe rutheniumThe, rheniumThe, tantalumThe, nickelThe, tungstenThe, and molybdenum.

The metathesis catalyst may include a ruthenium carbene complex and/or an entity derived from such a complex. The metathesis catalyst may include a material selected from the group consisting of a ruthenium vinylidene complex, a ruthenium alkylidene complex, a ruthenium methylidene complex, a ruthenium benzylidene complex, and combinations thereof, and/or an entity derived from any such complex or combination of such complexes. The metathesis catalyst may include a ruthenium carbene complex comprising at least one phosphine ligand and/or an entity derived from such a complex. The metathesis catalyst may include a ruthenium carbene complex comprising at least one tricyclohexylphosphine ligand and/or an entity derived from such a complex. The metathesis catalyst may include a ruthenium carbene complex comprising at least two tricyclohexylphosphine ligands [e.g., (PCy₃)₂Cl₂Ru=CH-CH=C(CH₃)₂, etc.] and/or an entity derived from such a complexThe metathesis catalyst may include a ruthenium carbene complex comprising at least one imidazolidine ligand and/or an entity derived from such a complex. The metathesis catalyst may include a ruthenium carbene complex comprising an isopropyloxy group attached to a benzene ring and/or an entity derived from such a complex.

The metathesis catalyst may include a Grubbs-type olefin metathesis catalyst and/or an entity derived therefromThe metathesis catalyst may include a first-generation Grubbs-type olefin metathesis catalyst and/or an entity derived therefrom. The metathesis catalyst may include a second-generation Grubbs-type olefin metathesis catalyst and/or an entity derived therefrom. The metathesis catalyst may include a first-generation Hoveda-Grubbs-type olefin metathesis catalyst and/or an entity derived therefrom. The metathesis catalyst may include a second-generation Hoveda-Grubbs-type olefin metathesis catalyst and/or an entity derived therefrom. The metathesis catalyst may include one or a plurality of the ruthenium carbene metathesis catalysts sold by Materia, Inc. of Pasadena, California and/or one or more entities derived from such catalysts. Representative metathesis catalysts from Materia, Inc. for use in accordance with the present teachings include but are not limited to those sold under the following product numbers as well as combinations thereof: product no. C823 (CAS no. 172222-30-9), product no. C848 (CAS no. 246047-72-3), product no. C601 (CAS no. 203714-71-0), product no. C627 (CAS no. 301224-40-8), product no. C571 (CAS no. 927429-61-6), product no. C598 (CAS no. 802912-44-3), product no. C793 (CAS no. 927429-60-5), product no. C801 (CAS no. 194659-03-9), product no. C827 (CAS no. 253688-91-4), product no. C884 (CAS no. 900169-53-1), product no. C833 (CAS no. 1020085-61-3), product no. C859 (CAS no. 832146-68-6), product no. C711 (CAS no. 635679-24-2), product no. C933 (CAS no. 373640-75-6).

The metathesis catalyst may include a molybdenum and/or tungsten carbene complex and/or an entity derived from such a complex. The metathesis catalyst may include a Schrock-type olefin metathesis catalyst and/or an entity derived therefromThe metathesis catalyst may include a high-oxidation-state alkylidene complex of molybdenum and/or an entity derived therefrom. The metathesis catalyst may include a high-oxidation-state alkylidene complex of tungsten and/or an entity derived therefrom. TheThe metathesis catalyst may include molybdenum (VI). The metathesis catalyst may include tungsten (VI). The metathesis catalyst may include a molybdenum- and/or a tungsten-containing alkylidene complex of a type described in one or more of (a) Angew. Chem. Int. Ed. Engl., 2003, 42, 4592-4633; (b) Chem. Rev., 2002, 102, 145-179; and/or (c) Chem. Rev., 2009, 109, 3211-3226.

Metathesis is a catalytic reaction that involves the interchange of alkylidene units among compounds containing one or more double bonds (i.e., olefinic compounds) via the formation and cleavage of the carbon-carbon double bonds. The α-ester-alk-ω-ene molecule **114** may be formed by a metathesis reaction of a natural oil containing unsaturated polyol esters, including a cross-metathesis reaction of a natural oil or a natural oil derivative with an alpha-olefin or with ethylene. The α-ester-alk-ω-ene molecule **114** may be formed by a metathesis reaction of a metathesized natural oil containing unsaturated polyol esters, including a cross-metathesis reaction of a metathesized natural oil with an alpha-olefin or with ethylene. Examples of cross-metathesis reactions of natural oils, natural oil derivatives and/or of metathesized natural oils that can produce substances including terminal alkenyl groups are described in US 2010/0145086 and in US 2012/0071676.

Examples of natural oils include but are not limited to vegetable oil, algal oil, animal fat, tall oil, derivatives of these oils, or mixtures thereof. Examples of vegetable oils include but are not limited to canola oil, rapeseed oil, coconut oil, corn oil, cottonseed oil, olive oil, palm oil, peanut oil, safflower oil, sesame oil, soybean oil, sunflower oil, linseed oil, palm kernel oil, tung oil, jatropha oil, mustard oil, camelina oil, pennycress oil, castor oil, and the like, and combinations thereof. Examples of animal fats include but are not limited to lard, tallow, poultry fat, yellow grease, fish oil, and the like, and combinations thereof. Examples of natural oil derivatives include but are not limited to metathesis oligomers, gums, phospholipids, soapstock, acidulated soapstock, distillate or distillate sludge, fatty acids and fatty acid alkyl ester such as 2-ethylhexyl ester, hydroxyl-substituted variations of the natural oil, and the like, and combinations thereof. For example, the natural oil derivative may be a fatty acid methyl ester (FAME) derived from the glyceride of the natural oil.

The natural oil may include canola or soybean oil, such as refined, bleached and deodorized soybean oil (i.e., RBD soybean oil). Soybean oil typically includes about 95 percent by weight (wt%) or greater (e.g., 99 wt% or greater) triglycerides of fatty acids. Major fatty acids in the polyol esters of soybean oil include but are not limited to saturated fatty acids such as palmitic acid (hexadecanoic acid) and stearic acid (octadecanoic acid), and unsaturated fatty acids such as oleic acid (9-octadecenoic acid), linoleic acid (9,12-octadecadienoic acid), and linolenic acid (9,12,15-octadecatrienoic acid).

Examples of metathesized natural oils include but are not limited to a metathesized vegetable oil, a metathesized algal oil, a metathesized animal fat, a metathesized tall oil, a metathesized derivatives of these oils, or mixtures thereof. For example, a metathesized vegetable oil may include metathesized canola oil, metathesized rapeseed oil, metathesized coconut oil, metathesized corn oil, metathesized cottonseed oil, metathesized olive oil, metathesized palm oil, metathesized peanut oil, metathesized safflower oil, metathesized sesame oil, metathesized soybean oil, metathesized sunflower oil, metathesized linseed oil, metathesized palm kernel oil, metathesized tung oil, metathesized jatropha oil, metathesized mustard oil, metathesized camelina oil, metathesized pennycress oil, metathesized castor oil, metathesized derivatives of these oils, or mixtures thereof. In another example, the metathesized natural oil may include a metathesized animal fat, such as metathesized lard, metathesized tallow, metathesized poultry fat, metathesized fish oil, metathesized derivatives of these oils, or mixtures thereof.

The α-ester-alk-ω-ene molecule **114** may be formed by a cross-metathesis reaction of a natural oil, a natural oil derivative and/or a metathesized natural oil containing unsaturated polyol esters with an organic compound containing a terminal alkenyl group, or with ethylene. An organic compound containing a terminal alkenyl group is a compound having an alkene group, where a first carbon of the alkene group is unsubstituted and a second carbon of the alkene group is substituted with one or two non-hydrogen substituents. The compound may include from 3 to about 20 carbon atoms, about 10 carbon atoms, about 6 carbon atoms, or about 3 carbon atoms. A cross-metathesis reaction may involve a single species of the compound containing a terminal alkenyl group, or it may involve a mixture of such species of the compound.

As an example, a compound containing a terminal alkenyl group for use in cross-metathesis may have the structure H₂C=C(R⁵)(R⁶), where R⁵ and R⁶ are independently hydrogen, a hydrocarbon group, or a heteroalkyl group, provided that at least one of R⁵ and R⁶ is not hydrogen. The heteroatoms of a heteroalkyl group may be present as part of a functional group substituent. R⁵ and R⁶ may be linked to form a cyclic structure. In a preferred embodiment, R⁵ and R⁶ are independently selected from C₁-C₂₀ alkyl, C₂-C₂₀ alkenyl, C₂-C₂₀ alkynyl, C₁-C₂₀ heteroalkyl, C₂-C₂₀ heteroalkenyl, C₂-C₂₀ heteroalkynyl, C₅-C₂₄ aryl, C₆-C₂₄ alkylaryl, C₆-C₂₄ arylalkyl, C₅-C₂₄ heteroaryl, and C₆-C₂₄ heteroalkylaryl, C₆-C₂₄ heteroarylalkyl.

Examples of monosubstituted compounds containing a terminal alkenyl group that may be used in cross-metathesis include 1-propene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene and larger alpha-olefins; 2-propenol, 3-butenol, 4-pentenol, 5-hexenol, 6-heptenol, 7-octenol, 8-nonenol, 9-decenol, 10-undecenol, 11-dodecenol, 12-tridecenol, 13-tetradecenol, 14-pentadecenol, 15-hexadecenol, 16-heptadecenol, 17-octadecenol, 18-nonadecenol, 19-eicosenol and larger alpha-alkenols; 2-propenyl acetate, 3-butenyl acetate, 4-pentenyl acetate, 5-hexenyl acetate, 6-heptenyl acetate, 7-octenyl acetate, 8-nonenyl acetate, 9-decenyl acetate, 10-undecenyl acetate, 11-dodecenyl acetate, 12-tridecenyl acetate, 13-tetradecenyl acetate, 14-pentadecenyl acetate, 15-hexadecenyl acetate, 16-heptadecenyl acetate, 17-octadecenyl acetate, 18-nonadecenyl acetate, 19-eicosenyl acetate and larger alpha-alkenyl acetates; 2-propenyl chloride, 3-butenyl chloride, 4-pentenyl chloride, 5-hexenyl chloride, 6-heptenyl chloride, 7-octenyl chloride, 8-nonenyl chloride, 9-decenyl chloride, 10-undecenyl chloride, 11-dodecenyl chloride, 12-tridecenyl chloride, 13-tetradecenyl chloride, 14-pentadecenyl chloride, 15-hexadecenyl chloride, 16-heptadecenyl chloride, 17-octadecenyl chloride, 18-nonadecenyl chloride, 19-eicosenyl chloride and larger alpha-alkenyl chlorides, bromides, and iodides; allyl cyclohexane, allyl cyclopentane; and the like. Examples of disubstituted compounds containing a terminal alkenyl group that may be used in cross-metathesis include isobutylene, 2-methylbut-1-ene, 2-methylpent-1-ene, 2-methylhex-1-ene, 2-methylhept-1-ene, 2-methyloct-1-ene, and the like.

Any combination of any of these compounds containing a terminal alkenyl group may be used in a cross-metathesis reaction with a natural oil, a natural oil derivative and/or a metathesized natural oil containing unsaturated polyol esters, to provide the α-ester-alk-ω-ene molecule **114.** In an exemplary embodiment, a composition including 9-DAME, which is an α-ester-alk-ω-ene molecule, can be prepared by the cross-metathesis of 1-propene with a natural oil, a natural oil derivative and/or a metathesized natural oil containing unsaturated polyol esters. For example, oleic acid and/or methyl oleate may undergo cross-metathesis with 1-propene to provide a composition including 9-DAME. Due to the stoichiometry of the cross-metathesis reaction, the product composition typically includes about 50 mole percent (mol%) 9-DAME and about 50 mol% 9-undecenoic acid methyl ester.

Ethylene also may be used in a cross-metathesis reaction with a natural oil, a natural oil derivative and/or a metathesized natural oil containing unsaturated polyol esters, to provide the α-ester-alk-ω-ene molecule **114.** In an exemplary embodiment, a composition including 9-DAME, which is an α-ester-alk-ω-ene molecule, can be prepared by the cross-metathesis of ethylene with a natural oil and/or a metathesized natural oil containing unsaturated polyol esters. For example, methyl oleate may undergo cross-metathesis with ethylene to provide a composition including 9-DAME. Due to the stoichiometry of the cross-metathesis reaction, the product composition typically includes about 50 mol% 9-DAME and about 50 mol% 1-decene.

The optional at least one other monomer **116** may include any polymerizable substance that contains an alkenyl group. Examples of such unsaturated polymerizable substances include the alpha-alkenols, alpha-alkenyl acetates, alpha-alkenyl halides (chlorides, bromides or iodides), allyl cyclohexane and allyl cyclopentane described above with regard to the monosubstituted compounds containing a terminal alkenyl group for cross-metathesis. Examples of such unsaturated polymerizable substances include ethylene; styrenes such as styrene and methyl styrene; halogenated vinyl compounds such as vinyl chloride, vinylidene chloride and tetrafluoroethylene; acrylates; acrylamide; acrylonitrile; *N*-vinyl pyrrolidone; and substituted derivatives thereof. Examples of acrylate monomers include butyl acrylate, 2-ethylhexyl acrylate, ethyl acrylate, lauryl acrylate, hexadecyl acrylate, and methacrylate derivatives of these monomers. Examples of acrylamide monomers include acrylamide, *N,N*-dimethyl acrylamide, *N*-ethyl acrylamide, *N-*isopropyl acrylamide and hydroxymethyl acrylamide, and methacrylamide derivatives of these monomers.

In one example, the optional at least one other monomer **116** may include an α-(carboxylic acid)-alk-ω-ene molecule having the chemical formula HO-C(=O)-(R⁵)-CH=CH₂, where R⁵ is an alkyl group having from 2 to 20 carbon atoms. Examples of α-(carboxylic acid)-alk-ω-ene molecules include but are not limited to 9-decenoic acid, 10-undecenoic acid and 11-dodecenoic acid. An α-(carboxylic acid)-alk-ω-ene molecule may be formed by hydrolyzing an α-ester-alk-ω-ene molecule **114.**

The reaction mixture **110** includes the first monomer **112,** the second monomer **114,** and optionally at least one other monomer **116.** The reaction mixture may include only these monomers, or it may include one or more other substances, such as a solvent, a buffer or a salt. Examples of solvents include but are not limited to protic solvents such as water, methanol, ethanol, isopropyl alcohol (IPA) and butanol; and aprotic solvents such as tetrahydrofuran (THF), dioxane, dimethyl formamide (DMF), toluene and xylene.

Forming **101** the reaction mixture **110** containing the first monomer **112,** the second monomer **114,** and optionally at least one other monomer **116** may include combining the monomers with an addition polymerization initiator. Examples of addition polymerization initiators include free radical polymerization initiators, cationic polymerization initiators and anionic polymerization initiators. A polymerization initiator is not required in the reaction mixture **110,** however, as addition polymerization may be initiated by heat or by electromagnetic radiation such as visible or ultraviolet light.

Preferably forming **101** the reaction mixture **110** includes combining the monomers with a free radical addition polymerization initiator. Selection of a particular free radical polymerization initiator may depend on a number of factors including but not limited to the polymerization temperature, the type of comonomers, and whether a solvent is present in the reaction mixture. Examples of free radical polymerization initiators include but are not limited to peroxides such as hydrogen peroxide; alkyl peroxides such as di-t-butyl peroxide, di-*t*-amyl peroxide, dilauroyl peroxide and 2,5-bis(*t*-butylperoxy)-2,5-dimethylhexane; acyl peroxides; aryl peroxides such as benzoyl peroxide, dicumyl peroxide and *t*-butyl peroxybenzoate; and hydroperoxides such as *t*-butyl hydroperoxide. Examples of free radical polymerization initiators include but are not limited to azo compounds such as 2,2'-azobisisobutyronitrile (AIBN), 2,2'-azobis(2-methylbutyronitrile), 2,2'-azobis(2,4-dimethylvaleronitrile), 2,2'-azobis(2-amidino-propane)-dihydrochloride, and 2,2'-azobis(N,N'-dimethylene-isobutylamidine). Examples of free radical polymerization initiators include but are not limited to persulfates such as potassium persulfate and ammonium persulfate. The amount of polymerization initiator may range, for example, from about 0.01 to 5 mol% based on the total moles of comonomers present.

Forming **102** a product mixture **120** containing a copolymer **122** having constitutional units formed from the monomers **112, 114** and optionally **116** may include heating the reaction mixture. The reaction mixture may be heated to a temperature of at least about 30 °C, including but not limited to a temperature from about 30 °C to about 250 °C, from about 40 °C to about 200 °C, from about 50 °C to about 175 °C, or from about 60 °C to about 160 °C. The reaction mixture may be heated for at least about 1 hour, including but not limited to from about 1 hour to about 100 hours, from about 5 hours to about 50 hours, from about 10 hours to about 30 hours, or from about 15 hours to about 25 hours.

Forming **102** a product mixture **120** containing a copolymer **122** having constitutional units formed from the monomers **112, 114** and optionally **116** may include isolating the copolymer **122.** Isolating the copolymer may include removing volatile starting material and/or byproducts under reduced pressure and/or heat. Isolating the copolymer may include dissolving the copolymer in a solvent to form a solution, and precipitating the copolymer by contacting the solution with a non-solvent for the copolymer. Isolating the copolymer may include dissolving the copolymer in a solvent to form a solution, and removing low molecular weight species from the solution by dialysis against the solvent.

The yield of the copolymer **122** may be at least about 50%. Preferably the yield of the copolymer **122** is at least about 25%, at least about 40%, at least about 50%, at least about 60%, at least about 70%, at least about 80%, at least about 90%, or at least about 95%.

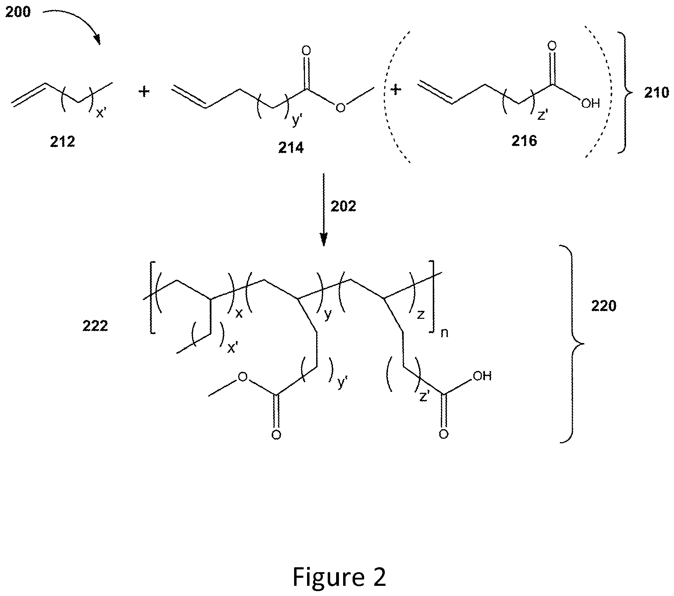

FIG. 2 depicts chemical structures and a reaction scheme for an example of a method **200** of forming a copolymer, such as copolymer for a lubricant composition. Method **200** includes forming a reaction mixture **210** containing a first monomer **212** that is an alpha-olefin, a second monomer **214** that is an α-ester-alk-ω-ene molecule, and optionally at least one other monomer, such as a α-(carboxylic acid)-alk-ω-ene molecule **216.** Method **200** further includes forming a product mixture **220** containing a copolymer **222** formed from the monomers **212, 214** and optionally **216.** In the alpha-olefin monomer **212** and in copolymer **222,** x' may be an integer from 0 to 20. In the α-ester-alk-ω-ene monomer **214** and in copolymer **222,** y' may be an integer from 1 to 19. In the optional α-(carboxylic acid)-alk-ω-ene monomer **216** and in copolymer **222,** z' may be an integer from 1 to 19. In the copolymer **222,** x + y + z = 1, where x may be from 0.01 to 0.99, y may be from 0.01 to 0.99, and z may be from 0 to 0.98. For example, x may be from 0.5 to 0.9, y may be from 0.1 to 0.5, and z may be from 0 to 0.4. Preferably x is from 0.65 to 0.9, y is from 0.1 to 0.35, and z is from 0 to 0.25. Preferably the ratio of x to y is at least 2:1, and preferably the ratio of x to (y+z) is at least 2:1. In the copolymer **222,** n may be from 2 to 100, from 3 to 50, or from 4 to 25.

In one example, the alpha-olefin monomer **212** is 1-octene (x' = 5), 1-decene (x' = 7), 1-dodecene (x' = 9) or the like, or combinations thereof; and the α-ester-alk-ω-ene monomer **214** is 9-DAME (y' = 6). In another example, the alpha-olefin monomer **212** is 1-octene (x' = 5), 1-decene (x' = 7), 1-dodecene (x' = 9) or the like, or combinations thereof; the α-ester-alk-ω-ene monomer **214** is 9-DAME (y' = 6) or the like, and the α-(carboxylic acid)-alk-ω-ene monomer **216** is 9-decenoic acid (z' = 6) or the like. The copolymer **222** formed from these three monomers **(212, 214** and **216)** also may be formed by polymerizing only monomers **212** and **214,** and then partially hydrolyzing the methyl ester groups of the constitutional units formed from the α-ester-alk-ω-ene monomer **214.**

Referring again to FIG. 1, the copolymer **122** optionally may be combined **103** with at least one other material **130.** In one example, the copolymer **122** is used as a base oil that is then combined with one or more lubricant additives. Examples of additives for lubricant compositions include but are not limited to detergents, antiwear agents, antioxidants, metal deactivators, extreme pressure (EP) additives, dispersants, viscosity index improvers, pour point depressants, corrosion protectors, friction coefficient modifiers, colorants, antifoam agents and demulsifiers. In another example, the copolymer **122** is used as a lubricant additive that is combined with a base oil, optionally with one or more other lubricant additives. For example, a lubricant composition may include from 50 to 100% of a base oil, and from 0 to 50% of one or more lubricant additives. The relative amounts of the base oil and optional additives may be varied according to the use of the lubricant composition. Lubricant compositions may be used in applications include but not limited to motor oils, transmission fluids, gear oils, industrial lubricating oils, metalworking oils, hydraulic fluids, drilling fluids, greases, compressor oils, cutting fluids and milling fluids.

Method **100** may produce a lubricant composition from renewable feedstocks, and may advantageously provide simpler and/or more cost-effective production, reduced variability, improved sourcing, and increased biorenewability than conventional methods for producing a lubricant composition from petrochemical feedstocks. In addition, lubricant compositions formed by method **100** may have useful combinations of properties, including but not limited to low viscosity, high viscosity, viscosity that can be varied from low to high, oxidative stability, thermal stability, and hydrolytic stability.

A low-viscosity lubricant composition may include a copolymer having constitutional units formed from monomers including a first alpha-olefin and an α-ester-alk-ω-ene molecule, and may have a kinematic viscosity at 100 °C of at most 20 cSt. The first alpha-olefin preferably has from 8 to 10 carbon atoms, and preferably includes 1-decene. The α-ester-alk-ω-ene molecule preferably includes at least one of 9-decenoic acid methyl ester, 9-decenoic acid ethyl ester, 9-decenoic acid propyl ester, 10-undecenoic acid methyl ester, 10-undecenoic acid ethyl ester, 10-undecenoic acid propyl ester, 11-dodecenoic acid methyl ester, 11-dodecenoic acid ethyl ester and 11-dodecenoic acid propyl ester, and preferably includes 9-DAME.

The copolymer of the low-viscosity lubricant composition further may have constitutional units formed from a second alpha-olefin. Preferably, if the copolymer includes constitutional units formed from a second alpha-olefin, the second alpha-olefin has from 8 to 16 carbon atoms. The copolymer of the low-viscosity lubricant composition optionally may have constitutional units formed from at least one other unsaturated monomer.

Preferably the low-viscosity lubricant composition has a kinematic viscosity at 100 °C of from 5 to 20 cSt, from 10 to 20 cSt, from 15 to 20 cSt, from 5 to 15 cSt or from 10 to 15 cSt. The low-viscosity composition may further include at most 50 wt% of a lubricant additive.

Method **100** may provide a low-viscosity lubricant composition having a kinematic viscosity at 100 °C of at most 20 cSt. For example, the first monomer **112** may be a first alpha-olefin having from 8 to 10 carbon atoms such as 1-decene, and the second monomer **114** may be an α-ester-alk-ω-ene molecule such as 9-DAME. The reaction mixture **110** further may include di-*t*-amyl peroxide as a polymerization initiator. The reaction mixture **110** further may include a chain transfer agent such as a thiol compound or a halide compound.

A high-viscosity lubricant composition may include a copolymer having constitutional units formed from monomers including a first alpha-olefin and an α-ester-alk-ω-ene molecule, and may have a kinematic viscosity at 100 °C of at least 40 cSt. The first alpha-olefin preferably has from 12 to 16 carbon atoms, and preferably includes 1-dodecene. The α-ester-alk-ω-ene molecule preferably includes at least one of 9-decenoic acid methyl ester, 9-decenoic acid ethyl ester, 9-decenoic acid propyl ester, 10-undecenoic acid methyl ester, 10-undecenoic acid ethyl ester, 10-undecenoic acid propyl ester, 11-dodecenoic acid methyl ester, 11-dodecenoic acid ethyl ester and 11-dodecenoic acid propyl ester, and preferably includes 9-DAME.

The copolymer of the high-viscosity lubricant composition further may have constitutional units formed from a second alpha-olefin. Preferably, if the copolymer includes constitutional units formed from a second alpha-olefin, the second alpha-olefin has from 8 to 16 carbon atoms. The copolymer of the high-viscosity lubricant composition optionally may have constitutional units formed from at least one other unsaturated monomer.

Preferably the high-viscosity lubricant composition has a kinematic viscosity at 100 °C of from 40 to 100 cSt, from 40 to 80 cSt, from 40 to 60 cSt, from 50 to 100 cSt, or from 50 to 80 cSt. The high-viscosity composition may further include at most 50 wt% of a lubricant additive.

Method **100** may provide a high-viscosity lubricant composition having a kinematic viscosity at 100 °C of at least 40 cSt. For example, the first monomer **112** may be a first alpha-olefin having from 12 to 16 carbon atoms such as 1-decene, and the second monomer **114** may be an α-ester-alk-ω-ene molecule such as 9-DAME. The reaction mixture **110** further may include di-*t*-butyl peroxide as a polymerization initiator. The method **100** may further include subjecting the copolymer to a first stripping at a temperature of at least 200 °C, under a vacuum of from 0.5 to 1 torr, and then subjecting the copolymer to a second stripping at a temperature of at least 200 °C, under a vacuum of from 0.1 to 1 torr. The method **100** may further include forming a second reaction mixture including the copolymer and di-t-butyl peroxide, and forming a second product mixture containing a second copolymer. This second copolymer preferably has constitutional units formed from the first and second monomers, and has a weight average molecular weight that is at least twice that of the original copolymer.

A variable-viscosity lubricant composition may include a copolymer having constitutional units formed from monomers including an alpha-olefin, an α-ester-alk-ω-ene molecule and an α-(carboxylic acid)-alk-ω-ene molecule, and may have a kinematic viscosity at 100 °C that varies from 15 to 35 cSt as the ratio of the α-ester-alk-ω-ene molecule to the α-(carboxylic acid)-alk-ω-ene molecule in the monomers varies from 99.9:0.1 to 0.1:99.9. For example, the alpha-olefin monomer may have from 8 to 16 carbon atoms, and preferably includes at least one of 1-octene, 1-decene and 1-dodecene. The α-ester-alk-ω-ene molecule preferably includes at least one of 9-decenoic acid methyl ester, 9-decenoic acid ethyl ester, 9-decenoic acid propyl ester, 10-undecenoic acid methyl ester, 10-undecenoic acid ethyl ester, 10-undecenoic acid propyl ester, 11-dodecenoic acid methyl ester, 11-dodecenoic acid ethyl ester and 11-dodecenoic acid propyl ester, and preferably includes 9-DAME. The α-(carboxylic acid)-alk-ω-ene molecule preferably includes at least one of 9-decenoic acid, 10-undecenoic acid and 11-dodecenoic acid.

The copolymer of the variable-viscosity lubricant composition optionally may have constitutional units formed from at least one other unsaturated monomer. The composition may further include at most 50 wt% of a lubricant additive.

Method **100** may provide a variable-viscosity lubricant composition having a kinematic viscosity at 100 °C that varies from 15 to 35 cSt as the ratio of the α-ester-alk-ω-ene molecule to the α-(carboxylic acid)-alk-ω-ene molecule in the monomers varies from 99.9:0.1 to 0.1:99.9. For example, the first monomer **112** may be an alpha-olefin having from 8 to 16 carbon atoms, the second monomer **114** may be an α-ester-alk-ω-ene molecule such as 9-DAME, and the at least one other monomer **116** may be an α-(carboxylic acid)-alk-ω-ene molecule such as 9-decenoic acid.

### EXAMPLES

### Materials & Methods

Percent incorporation of comonomers was estimated using proton nuclear magnetic resonance spectrometry (¹H-NMR). Residual monomer was quantified with gas chromatography (GC), using a DB-5HT capillary column (J&W Scientific) and a flame ionization detector. The GC measurements also provided qualitative analysis of residual dimer, trimer and tetramer. Residual monomer, as well as reaction by-products, were separated and quantified with high performance liquid chromatography (HPLC), using an Agilent Zorbax Eclipse Plus C18 column and either a refractive index detector or a UV-visible detector.

Molecular weights of polymers were measured using gel permeation chromatography (GPC), using tetrahydrofuran (THF) as the mobile phase. The columns used in the GPC analysis were a guard column (VARIAN PLgel 5 µm guard column), a first separation column (200 - 400,000 daltons; VARIAN PLgel 5 µm MIXED-D), and a second separation column (< 30,000 daltons; VARIAN PLgel 3 µm MIXED-E).

Kinematic viscosity was measured at 40 °C and/or at 100 °C using temperature controlled oil baths. As Brookfield dynamic viscosity scaled with the kinematic viscosity for some of the copolymers, kinetic viscosities for some samples were calculated from Brookfield dynamic viscosity measurements. Kinematic viscosity (KV) is reported in units of centistokes (cSt).

### Example 1: Copolymerizations of 1-decene and 9-DAME. (not claimed)

Copolymers were formed by reacting an alpha-olefin monomer (1-decene) and an α-ester-alk-ω-ene monomer (9-DAME). In an initial polymerization reaction, a reaction mixture was formed containing a 10:1 molar ratio of 1-decene to 9-DAME. To this mixture was added di-t-butyl peroxide or di-t-amyl peroxide as the polymerization initiator. The peroxide was added to the reaction mixture in ten equal portions. The reaction mixture was maintained at room temperature until the first peroxide addition was complete, after which the reaction mixture was heated to 150 °C. In some instances, the monomers were sparged before the reaction, the reaction mixture was heated prior to adding the initiator, and/or a static inert gas atmosphere was established using an inlet on the top of the condenser rather than an inlet and outlet, which would allow flow of the inert gas through the reaction. Peroxide decomposition products were generated throughout the reaction, producing volatile alkanes, ketones and alcohols. As these decomposition products could cool the reaction temperature if left in the reaction mixture, a Dean-Stark trap was used to remove and collect moderately volatile products. The trap was separated from the reaction vessel by a Vigreux column, to inhibit carryover of monomer and/or peroxide into the trap, which would reduce the yield.

In one example, 250 grams (g) of 1-decene (Aldrich; 1.78 mol), 33 g of 9-DAME (0.178 mol) and 16.25 milliliters (mL) of di-*t*-butyl peroxide (density of 0.8 grams per milliliter (g/mL); 13 g; 0.089 mol) were combined to form a reaction mixture in a 1-liter, 3-necked round-bottom flask equipped with a magnetic stirrer, a gas inlet, a gas outlet, a thermometer, a Dean-Stark trap and a condenser. A low flow of nitrogen gas was established in the flask, and the reaction mixture was heated to 150 °C. Once the mixture was at 150 °C, another 16.25 mL of di-*t*-butyl peroxide (13 g; 0.089 mol) was added to the reaction mixture. The total molar amount of di-*t*-butyl peroxide in the reaction was equal to the molar amount of 9-DAME, which corresponded to 8.3 mole percent (mol%) of the total reaction (moles peroxide / (moles peroxide + moles monomers) = 0.0833). The reaction mixture was stirred at 150 °C for 5-10 hours, and liquid in the Dean-Stark trap was removed periodically. The resulting clear product was allowed to cool to room temperature under the nitrogen flow, and was transferred to a short path distillation apparatus and then vacuum-stripped to remove unreacted monomer (1-decene and/or 9-DAME). The product yield left in the pot of the distillation apparatus was about 66%.

In another example, 112.86 g of 1-decene (Aldrich; 0.80 mol) and 14.83 g of 9-DAME (0.08 mol) were combined to form a monomer mixture in a 250 mL, 3-necked round-bottom flask equipped with a magnetic stirrer, a gas inlet, a gas outlet, a thermocouple-controlled heating mantle, a Dean-Stark trap and a condenser. The monomer mixture was sparged with nitrogen for at least 1 hour, and then heated to 150 °C under a low flow of nitrogen gas. Once the mixture was at 150 °C, 1/10^{th} of the di-*t*-amyl peroxide initiator was added by syringe to form a reaction mixture. As the total amount of di-*t*-amyl peroxide initiator used in the reaction was 24.54 g (30 mL; density of 0.82 g/mL; 0.14 mol), each addition of 1/10^{th} of the initiator was 3.0 mL. Aliquots of 3.0 mL of di-t-amyl peroxide were added to the reaction mixture every 30 minutes, resulting in a total addition time for the initiator of 4.5 hours. The reaction mixture typically began to reflux after 3 or 4 additions of the initiator, and liquid typically began to collect in the trap after 6 additions of the initiator. Once all the initiator was added, the reaction mixture was stirred at 150 °C for 4 hours, and then the product mixture was allowed to cool to room temperature. The flask was equipped with a short path distillation apparatus for stripping, and the product mixture was slowly heated to 200 °C under vacuum, using thermocouple-controlled heating. Stripping at 200-205 °C at a pressure below 2 torr removed the residual monomer, to a level of less than 0.25% in the product, resulting in a product left in the flask that was colorless to pale yellow, and slightly hazy. This product was filtered while warm (~70-100 °C) using a medium coarseness paper filter or a coarse fritted filter. The yield of pale yellow product was at least 85%. This example was scaled-up by carrying out the reaction in a 5-L flask, using 1,504.85 g 1-decene (10.73 mol), 197.70 g 9-DAME (1.07 mol) and 400 mL of di-t-amyl peroxide (1.88 mol). This example was further scaled-up by carrying out the reaction in a 12-L flask, using 3,762.12 g 1-decene (26.82 mol), 494.25 g 9-DAME (2.68 mol) and 1 L of di*t*-amyl peroxide (4.69 mol).

### Example 2: Copolymerization of 1-decene and 9-DAME - effects of peroxide type, temperature and initiator addition.

A designed experiment (DOE) was conducted to study the effect of the variables of peroxide type, mode of addition of the peroxide, and temperature on the copolymerization of a 10:1 molar ratio of 1-decene and 9-DAME. Five different peroxides were used - di-*t*-butyl peroxide, di-*t*-amyl peroxide, dicumyl peroxide, dibenzoyl peroxide, and dilauroyl peroxide. The amount of initiator in each copolymerization was 8.3 mol% peroxide, calculated as moles peroxide / (moles peroxide + moles monomers). The three reaction temperatures corresponded to the 30, 60 and 120 minute half-lives of each peroxide. The three different modes of addition were defined as: a) Mode 1-10% of the peroxide added at 30 minute intervals, with a total addition time of 4.5 hours; b) Mode 2 - 10% of the peroxide added at 60 minute intervals, with a total addition time of 9 hours; c) Mode 3 - 30% of the peroxide added initially, followed by 10% at 30 minute intervals, with a total addition time of 3.5 hours. All reactions were conducted in a 250 ml flask.

Table 1 lists the reaction variables, reaction yield, kinematic viscosity (KV) at 100 °C and color of the products. JMP software was used to analyze the data. All of the copolymers had KV at 100 °C below 21 cSt.

**Table 1: Reaction variables and results for copolymerizations of 1-decene and 9-DAME**

| | **Variables** | | | | **Results** | | |
|---|---|---|---|---|---|---|---|
| **Initiator** | **Initiator addition mode** | **Initiator half-life (min)** | **Reaction temperature (°C)** | **Reaction time (min)** | **Yield (%)** | **KV at 100 °C (cSt)** | **Color** |
| di-*t*-amyl peroxide | Mode 1 | 30 | 149.5 | 8.5 | 59.4 | 15.56 | pale |
| | Mode 1 | 120 | 137.0 | 20.5 | 63.9 | 13.32 | pale |
| | Mode 2 | 60 | 143.1 | 17.0 | 68.4 | 12.71 | pale |
| | Mode 3 | 30 | 149.5 | 7.5 | 61.4 | 13.01 | pale |
| di-*t*-butyl peroxide | Mode 1 | 60 | 149.1 | 12.5 | 52.7 | 17.35 | pale |
| | Mode 1 | 120 | 143.0 | 20.5 | 56.8 | 15.53 | pale |
| | Mode 2 | 60 | 149.1 | 17.0 | 47.9 | 20.49 | pale |
| | Mode 3 | 30 | 155.4 | 7.5 | 46.6 | 20.81 | pale |
| benzoyl peroxide | Mode 3 | 60 | 91.7 | 11.5 | 42.8 | 10.89 | dark yellow |
| dibenzoyl peroxide | Mode 1 | 30 | 97.8 | 8.5 | 41.4 | 13.08 | dark yellow |
| | Mode 2 | 120 | 85.9 | 25.0 | 41.5 | 12.61 | dark yellow |
| dicumyl peroxide | Mode 1 | 60 | 137.0 | 12.5 | 46.7 | 15.55 | light yellow |
| | Mode 2 | 30 | 143.3 | 13.0 | 54.0 | 16.22 | light yellow |
| | Mode 3 | 120 | 130.8 | 19.5 | 52.6 | 13.26 | light yellow |
| dilauroyl peroxide | Mode 1 | 60 | 81.1 | 12.5 | 27.2 | 9.24 | pale |
| | Mode 2 | 30 | 86.8 | 13.0 | 28.1 | 9.45 | pale |
| | Mode 3 | 120 | 75.7 | 19.5 | 29.2 | 7.61 | pale |

The initiator di-*t*-amyl peroxide provided the highest yield of copolymer (55-70%), while providing kinematic viscosities between 12 and 16 cSt. The initiator di-*t*-butyl peroxide provided copolymer yields of from 45-57%, and kinematic viscosities between 15 and 30 cSt. The initiator dicumyl peroxide provided copolymer yields of from 45-55%, and kinematic viscosities between 10 and 20 cSt. The initiator dibenzoyl peroxide provided copolymer yields of from 40-45%, and kinematic viscosities between 7 and 15 cSt. The initiator dilauroyl peroxide provided copolymer yields of from 25-30%, and kinematic viscosities between 5 and 10 cSt.

The effect of water on the copolymerization of 1-decene and 9-DAME was studied by using a hydroperoxide initiator, and by using di-*t*-butyl peroxide initiator alone or in combination with water. The polymerization reactions were performed as described above, with reaction mixtures containing a 10:1 molar ratio of 1-decene to 9-DAME, and a reaction temperature of 155.4 °C. The initiator was either *t*-butyl hydroperoxide solution (70 wt% in water), di-it-butyl peroxide mixed with water, or neat di-t-butyl peroxide. The amount of initiator in each copolymerization was 13.7 mol% peroxide, calculated as moles peroxide / (moles peroxide + moles monomers), and assuming a peroxide content of 70 wt% in the *t*-butyl hydroperoxide solution. Table 2 lists the type of initiator, reaction yield, and kinematic viscosity (KV) at 100 °C for the copolymerization reactions. The addition of water into the reaction mixture appeared to reduce both the yield and the kinematic viscosity of the copolymer.

**Table 2: Effect of water on copolymerizations of 1-decene and 9-DAME**

| **Initiator** | **Yield (%)** | **KV at 100 °C (cSt)** | **Color** |
|---|---|---|---|
| *t*-butyl hydroperoxide, 70 wt% in water | 11.5 | 8.44 | dark yellow |
| di-*t*-butyl peroxide + water | 39.5 | 15.19 | pale, slightly cloudy |
| di-*t*-butyl peroxide | 72.2 | 29.31 | pale, transparent |

The effect of combining peroxide initiators in the copolymerization of 1-decene and 9-DAME was studied by comparing the results of copolymerizations carried out with di-*t*-butyl peroxide initiator, with di-*t*-amyl peroxide initiator, or with a 1:1 combination of di-*t*-butyl peroxide and di-*t*-amyl peroxide. The copolymerization reactions were performed as described above, with reaction mixtures containing a 10:1 molar ratio of 1-decene to 9-DAME, and a total initiator loading of 13.7 mol% peroxide. The reaction temperatures were selected based on the 30 minute halflives of each initiator, with the reaction temperature of the copolymerization with 1:1 di-*t*-butyl peroxide and di-t-amyl peroxide calculated based on an average of the two initiator halflives. Table 3 lists the type and amounts of each initiator, reaction temperature, reaction yield, and kinematic viscosity (KV) at 100 °C for the copolymerization reactions. The combination initiator provided the higher yield associated with di-t-amyl peroxide, and provided the kinematic viscosity associated with di-t-butyl peroxide.

**Table 3: Effect of combining initiators on copolymerizations of 1-decene and 9-DAME**

| **Initiator** | **Reaction Temp (°C)** | **Yield (%)** | **KV at 100 °C (cSt)** |
|---|---|---|---|
| di-*t*-amyl peroxide | 149.5 | 93.2 | 19.15 |
| | | 89.6 | 19.40 |
| 1:1 di-*t*-butyl peroxide + di-*t*-amyl peroxide | 152 | 92.4 | 32.56 |
| di-*t*-butyl peroxide | 155.4 | 80.5 | 32.82 |

### Example 3: Copolymerization of 1-decene and 9-DAME - effects of peroxide loading.

Copolymers were formed by reacting 1-decene as the alpha-olefin monomer and 9-DAME as the α-ester-alk-ω-ene monomer, with different amounts of either di-*t*-amyl peroxide or di-*t*-butyl peroxide as the initiator. The copolymerization reactions were performed as described in Example 1, with reaction mixtures containing a 10:1 molar ratio of 1-decene to 9-DAME, a reaction temperature of 149.5 °C for copolymerizations using di-*t-*amyl peroxide, and a reaction temperature of 155 °C for copolymerizations using di-*t*-butyl peroxide. Table 4 lists the amount of initiator, reaction yield, and kinematic viscosity (KV) at 100 °C for the copolymerization reactions. Both the reaction yields and the kinematic viscosities increased as the initiator loading increased. In addition, the type of initiator affected the viscosity of the copolymers. The di-*t*-amyl peroxide was more effective at providing a low-viscosity copolymer than was the di-*t*-butyl peroxide initiator.

**Table 4: Copolymerizations of 1-decene and 9-DAME with different peroxide initiators**

| **Initiator** | **Initiator (mol%)** | **Reaction temp (°C)** | **Yield (%)** | **KV at 100 °C (cSt)** |
|---|---|---|---|---|
| di-*t*-amyl peroxide | 8.4 | 149.5 | 59.9 | 15.20 |
| di-*t*-butyl peroxide | 8.3 | 155 | 49.9 | 18.54 |
| di-*t*-amyl peroxide | 13.8 | 149.5 | 89.1 | 15.02 |
| di-*t*-butyl peroxide | 13.7 | 155 | 72.2 | 29.31 |

Copolymers were formed by reacting 1-decene and 9-DAME, with different amounts of di-t-amyl peroxide initiator. The copolymerization reactions were performed as described in Example 1, with reaction mixtures containing a 10:1 molar ratio of 1-decene to 9-DAME, a "Mode 1" addition profile for the initiator, and a reaction temperature of 149.5 °C. The amount of di-t-amyl peroxide initiator was varied from 2.2 mol% to 15.5 mol%. The kinematic viscosities, molecular weights and elemental composition of the resulting copolymers were measured.

Table 5 lists the amount of initiator, reaction yield, kinematic viscosity (KV) at 100 °C, and molecular weights of the copolymers as measured by GPC. The polydispersity index (PDI) was calculated as weight average molecular weight (M_{w}) divided by number average molecular weight (Mₙ). In addition, the copolymers were analyzed by elemental analysis, which indicated that the oxygen contents in each of the copolymers were higher than the theoretical values. The oxygen contents did not appear to correlate with the loading of the initiator.

**Table 5: Reaction variables and results for copolymerizations of 1-decene and 9-DAME**

| **Initiator (mol%)** | **Yield (%)** | **KV at 100 °C (cSt)** | **Mₙ** | **M_{w}** | **PDI** |
|---|---|---|---|---|---|
| 2.2 | 10.0 | 10.92 | 606 | 847 | 1.33 |
| 4.4 | 27.6 | 13.82 | 661 | 826 | 1.40 |
| 6.4 | 49.2 | 11.53 | 612 | 801 | 1.31 |
| 8.4 | 59.9 | 15.20 | 656 | 846 | 1.29 |
| 10.2 | 71.1 | 15.91 | 759 | 1051 | 1.38 |
| 12.1 | 78.8 | 15.47 | 702 | 954 | 1.36 |
| 13.8 | 89.1 | 15.02 | 682 | 917 | 1.34 |
| 15.5 | 92.6 | 18.97 | 744 | 1187 | 1.60 |

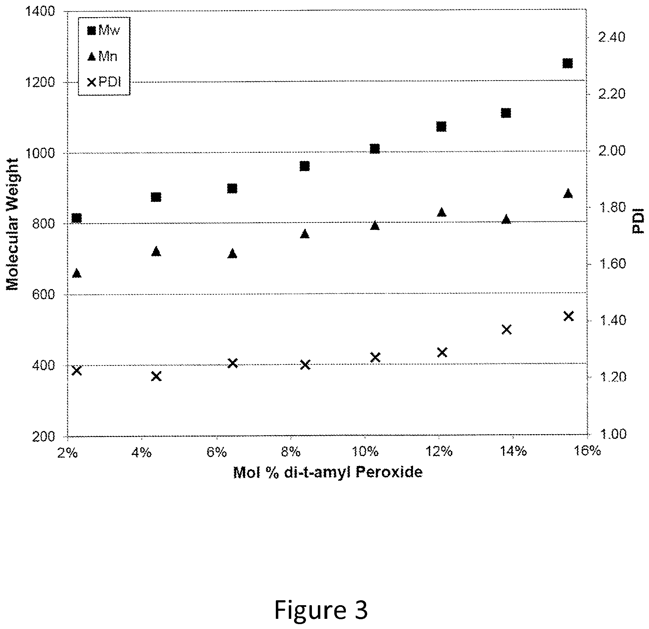

FIG. 3 is a graph of copolymer molecular weights and of polydispersities as a function of di-*t*-amyl peroxide initiator loading, where the data points are from Table 5. Increasing the amount of di-*t*-amyl peroxide initiator above 8.4 mol% provided higher molecular weight copolymers.

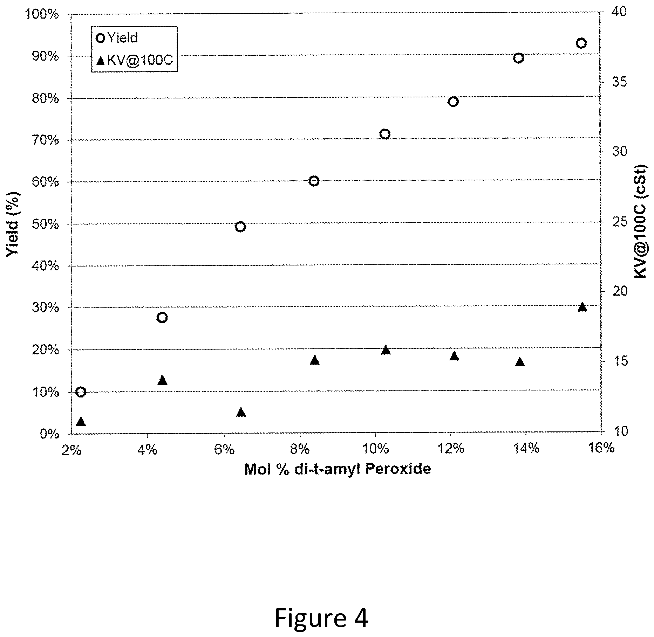

FIG. 4 is a graph of reaction yield and of copolymer viscosity as a function of di-*t*-amyl peroxide initiator loading, where the data points are from Table 5. The reaction yield increased as the initiator loading increased. Each of the copolymers had KV at 100 °C below 19 cSt. A relatively narrow range of viscosities, from 15.02 to 15.91 cSt, was measured for copolymers produced using from 8.4 to 13.8 mol% initiator.

### Example 4: Copolymerization of 9-DAME with alpha-olefins other than 1-decene.

Copolymers were formed by reacting one, two or three different alpha-olefin monomers (1-octene, 1-decene and/or 1-dodecene) and an α-ester-alk-ω-ene monomer (9-DAME), with di-*t*-amyl peroxide initiator. The molar ratio of alpha-olefin(s) to 9-DAME in each copolymerization was 10:1, and the initiator was present at a loading of 13.7 mol%. Although the copolymerization reactions were performed with refluxing, the reaction temperatures depended on the identity of the comonomers. Table 6 lists the type and amount of monomers, the boiling point of each monomer, the reaction yield, and the kinematic viscosity (KV) at 100 °C for the copolymerization reactions.

**Table 6: Copolymerizations of different alpha-olefins and 9-DAME**

| | **Monomer (equivalents)** | | | | |
|---|---|---|---|---|---|
| **1-Octene** (bp 122 °C) | **1-Decene** (bp 171 °C) | **1-Dodecene** (bp 213 °C) | **9-DAME** (bp 120 °C*) | **Yield (%)** | **KV at 100 °C (cSt)** |
| 10 | -- | -- | 1 | 61.9** | 12.47 |
| -- | 10 | -- | 1 | 93.9 | 19.44 |
| -- | -- | 10 | 1 | 95.5 | 22.44 |
| 5 | 5 | -- | 1 | 82.4 | 22.81 |
| -- | 5 | 5 | 1 | 94.9 | 20.44 |
| 5 | -- | 5 | 1 | 93.4 | 20.14 |
| 3.33 | 3.33 | 3.33 | 1 | 91.9 | 22.31 |

| | | | | | |
|---|---|---|---|---|---|
| ^{∗} Boiling point at 1 torr pressure. ^{∗∗} The reaction temperature was limited to 125-130 °C. | | | | | |

The low boiling point of 1-octene appeared to preclude the 10:1 1-octene / 9-DAME copolymerization reaction from reaching the typical reaction temperature of 149.5 °C. This lower reaction temperature appeared to provide a lower yield and a lower kinematic viscosity for the resulting copolymer. Copolymerizations in which 1-octene was combined with another alpha-olefin were able to maintain reaction temperatures of 149.5 °C, and the yields and kinematic viscosities of the resulting copolymers were similar to that of the 10:1 1-decene / 9-DAME copolymer. Accordingly, 1-octene may be a useful comonomer when combined with other alpha-olefins having higher boiling points.

Copolymers were formed by reacting an α-ester-alk-ω-ene monomer (9-DAME) and either 1-decene or 1-dodecene as the alpha-olefin monomer. The molar ratio of alpha-olefin(s) to 9-DAME was varied, with ratios of 10:1, 3:1 or 1:1. The peroxide initiator was either di-*t*-amyl peroxide or di-*t*-butyl peroxide, and the loading of the initiator was either 13.7 mol% or about 8.4 mol%. Table 7 lists the monomers, monomer ratios, type of initiator, initiator loading, reaction yield, and kinematic viscosity (KV) at 100 °C for the copolymerization reactions. In addition, the differences in the yield and in the kinematic viscosity between comparable copolymerization reactions that differed only in the identity of the alpha-olefin are listed in the table. The effect of substituting 1-dodecene for 1-decene in the copolymerizations depended on the peroxide used, the amount of peroxide, and on the molar ratio of the alpha-olefin to 9-DAME.

**Table 7: Copolymerizations of 9-DAME with either 1-decene or 1-dodecene**

| **Alpha-olefin (molar ratio*)** | **Initiator (mol%)** | **Yield (%)** | **Yield difference** | **KV at 100 °C (cSt)** | **KV difference** |
|---|---|---|---|---|---|
| 1-decene (10:1) | di-*t*-amyl peroxide (13.7) | 93.9 | 1.7% | 19.44 | 14.3% |
| 1-dodecene (10:1) | | 95.5 | | 22.44 | |
| 1-decene (10:1) | di-*t*-butyl peroxide (8.3) | 60.2 | 18.7% | 21.07 | 10.4% |
| 1-dodecene (10:1) | | 72.7 | | 23.19 | |
| 1-decene (10:1) | di-*t*-butyl peroxide (13.7) | 80.5 | 6.4% | 32.82 | 6.8% |
| 1-dodecene (10:1) | | 85.8 | | 35.14 | |
| 1-decene (3:1) | di-*t*-butyl peroxide (8.5) | 68.9 | 5.5% | 17.80 | 18.9% |
| 1-dodecene (3:1) | | 72.8 | | 23.39 | |
| 1-decene (3:1) | di-*t*-butyl peroxide (13.7) | 87.2 | 3.8% | 31.48 | 21.2% |
| 1-dodecene (3:1) | | 90.6 | | 38.93 | |
| 1-decene (1:1) | di-*t*-amyl peroxide (13.7) | 95.0 | 0.6% | 28.81 | 1.3% |
| 1-dodecene (1:1) | | 95.6 | | 29.18 | |

| | | | | | |
|---|---|---|---|---|---|
| * Of alpha-olefin to 9-DAME. | | | | | |

### Example 5: Copolymerization of 1-decene and 9-DAME - effects of 9-DAME loading.

Copolymers were formed by reacting an alpha-olefin monomer (1-decene) and an α-ester-alk-ω-ene monomer (9-DAME), where the mole percent of 9-DAME in the monomer mixture was varied from 0 mol% to 9.1 mol%. The initiator was di*t*-amyl peroxide, which was present in the reaction mixtures at a loading of 8.4 mol%. The reactions were held at 149.5 °C for 4 hours after the last addition of the initiator, and the products were isolated as described above. Table 8 lists the amount of each monomer, the reaction yield, and the kinematic viscosity (KV) at 100 °C for the copolymerization reactions.

**Table 8: Copolymerizations of 1-decene with different amounts of 9-DAME**

| **1-decene (mol% of monomers)** | **9-DAME (mol% of monomers).** | **Yield (%)** | **KV at 100 °C (cSt)** |
|---|---|---|---|
| 100 | 0 | 59.9 | 15.44 |
| 99 | 1 | 57.9 | 15.48 |
| 97 | 3 | 57.3 | 15.44 |
| 95 | 5 | 57.8 | 14.60 |
| 92.5 | 7.5 | 61.0 | 14.35 |
| 90.9 | 9.1 | 59.9 | 15.20 |

The yield and kinematic viscosity at 100 °C were not substantially affected by the variation of the amount of 9-DAME from 0 to 9.1 mol%. Accordingly, at these monomer incorporation levels, the kinematic viscosity was not substantially affected by differences in the polarity of the copolymers. In addition, the percentage of comonomer in the copolymer that was derived from 9-DAME, as determined by ¹H-NMR, was consistent with the percentage of 9-DAME in the monomer mixture. Accordingly, 1-decene and 9-DAME had substantially equivalent reactivity in these copolymerization reactions.

### Example 6: Copolymerization of 1-decene, 9-DAME and 9-DA.

Copolymers were formed by reacting 1-decene, an α-ester-alk-ω-ene monomer (9-DAME) and/or an α-(carboxylic acid)-alk-ω-ene monomer (9-decenoic acid; 9-DA), with di-*t*-amyl peroxide initiator. The molar ratio of alpha-olefin to the 9-DAME and/or 9-DA in each copolymerization was 10:1. Table 9 lists the type and amount of monomers, the reaction yield, and the kinematic viscosity (KV) at 100 °C for the copolymerization reactions.

**Table 9: Copolymerizations of 1-decene with 9-DAME and/or 9-DA**

| | **Monomer (equivalents)** | | | |
|---|---|---|---|---|
| **1-decene** | **9-DAME** | **9-DA** | **Yield (%)** | **KV at 100 °C (cSt)** |
| 10 | 1 | 0 | 88.8 | 15.53 |
| 10 | 0.5 | 0.5 | 85.7 | 28.1 |
| 10 | 0 | 1 | 89.4 | 33.70 |

These three copolymers can provide information regarding the potential effects of hydrolysis on copolymers of alpha-olefins and α-ester-alk-ω-ene monomers. Hydrolysis of ester groups may occur due to inadvertent introduction of water during the copolymerization or stripping processes, and also may occur during use of a lubricant composition containing the copolymer. One effect of the presence of carboxylic acid groups in the copolymers was an increase in viscosity.

### Example 7: Copolymerization of 1-dodecene and 9-DAME - effects of peroxide type and loading.

Copolymerizations were performed with 1-dodecene as the alpha-olefin monomer instead of 1-decene. The α-ester-alk-ω-ene monomer was 9-DAME, and copolymers were formed by reacting 1-dodecene and 9-DAME with different amounts of di*t*-butyl peroxide initiator. The polymerization reactions were performed as described in Example 1, with reaction mixtures containing a 10:1 molar ratio of 1-dodecene to 9-DAME, and a reaction temperature of 155 °C. The amount of di-*t*-butyl peroxide initiator was varied from 4.0 mol% to 13.7 mol%. Table 10 lists the amount of initiator, reaction yield, and kinematic viscosity (KV) at 100 °C for the copolymerization reactions.

**Table 10: Copolymerizations of 1-dodecene and 9-DAME**

| **Initiator (mol%)** | **Yield (%)** | **KV at 100 °C (cSt)** |
|---|---|---|
| 4.0 | 44.2 | 15.61 |
| 6.0 | 58.2 | 18.25 |
| 8.3 | 73.2 | 22.51 |
| 8.3 | 72.1 | 21.75 |
| 13.7 | 85.8 | 32.17 |

Copolymers were formed by reacting 1-dodecene and 9-DAME in a molar ratio of 10:1, using different peroxide initiators. In addition to di-*t*-butyl peroxide and di-*t-*amyl peroxide, 2,5-bis(*t*-butylperoxy)-2,5-dimethylhexane and *t*-butyl peroxybenzoate were used as polymerization initiators. The 2,5-bis(*t*-butylperoxy)-2,5-dimethylhexane initiator could generate two equivalents of radicals per molecule, theoretically requiring half as much initiator in a copolymerization. Table 11 lists the type and amount of initiator, reaction yield, and kinematic viscosity (KV) at 100 °C for the copolymerization reactions.

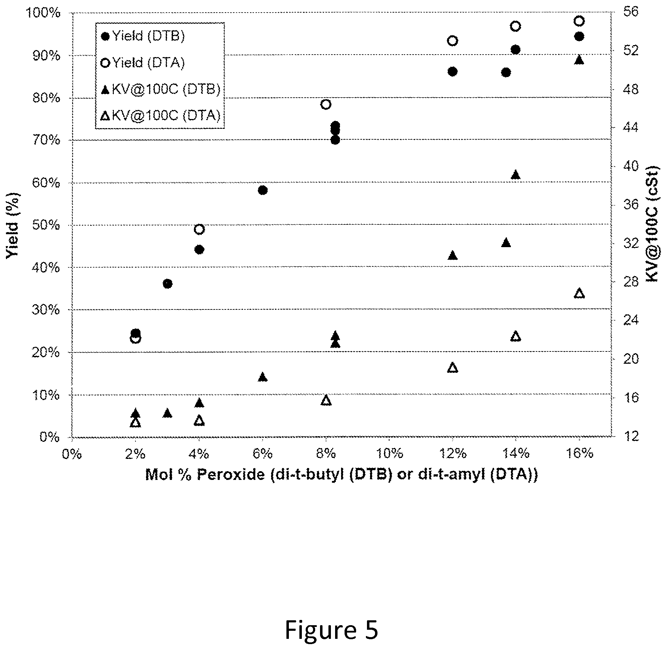

FIG. 5 is a graph of reaction yield and of copolymer viscosity as a function of initiator loading, where the data points are from Table 11. Both the reaction yields and the kinematic viscosities increased as the initiator loading increased. In addition, the type of initiator affected the viscosity of the copolymers. As shown in FIG. 5, the copolymers formed using di-*t*-butyl peroxide had a steeper rate of increase in kinematic viscosity (KV) with increasing initiator loading than did the copolymers formed using di-*t*-amyl peroxide. The kinematic viscosity of the copolymers formed using di-*t*-amyl peroxide were at most 26.85 cSt, even at 16 mol% initiator loading. Accordingly, di-*t*-butyl peroxide was more effective at providing a high-viscosity copolymer, whereas di-*t*-amyl peroxide more effective at providing a low-viscosity copolymer.

**Table 11: Copolymerizations of 1-dodecene and 9-DAME**

| **Initiator** | **Initiator mol%** | **Yield (%)** | **KV at 100 °C (cST)** |
|---|---|---|---|
| di-*t*-butyl peroxide | 2 | 24.5 | 14.53 |
| | 3 | 36.1 | 14.53 |
| | 4 | 44.2 | 15.61 |
| | 6 | 58.2 | 18.25 |
| | 8.3 | 73.2 | 22.51 |
| | 8.3 | 72.1 | 21.75 |
| | 12 | 86.0 | 30.82 |
| | 13.7 | 85.8 | 32.17 |
| | 14 | 91.2 | 39.22 |
| | 16 | 94.3 | 51.10 |
| | 2* | 37.7 | 15.68 |
| 2,5-bis(*t*-butylperoxy)-2,5-dimethylhexane | 2* | 40.0 | 15.35 |
| | 4* | 64.2 | 17.73 |
| *t*-butyl peroxybenzoate | 8 | 64.0 | 19.52 |
| | 4 | 49.0 | 13.79 |
| | 8 | 78.3 | 15.81 |
| di-*t*-amyl peroxide | 12 | 93.3 | 19.20 |
| | 14 | 96.7 | 22.44 |
| | 16 | 97.9 | 26.85 |

| | | | |
|---|---|---|---|
| * Equivalents of initiator = 2 × mol% ; i.e. 4, 4 and 8 equivalent %, respectively. | | | |

Copolymerizations using the 2,5-bis(*t*-butylperoxy)-2,5-dimethylhexane initiator had a slightly lower yield than those using di-*t*-butyl peroxide, but both types of copolymerizations produced copolymers having similar kinematic viscosities at 100 °C. The *t*-butyl peroxybenzoate initiator also had a lower yield, and the resulting copolymers had a light yellow color. In addition, isolating the copolymers formed using t-butyl peroxybenzoate was more difficult than in other copolymerizations, as the benzoic acid byproduct of the reaction can solidify in a distillation condenser.

### Example 8: Copolymerization of 1-dodecene and 9-DAME - effects of comonomer ratios.

Copolymers were formed by reacting by reacting an alpha-olefin monomer (1-dodecene) and an α-ester-alk-ω-ene monomer (9-DAME) in varying ratios. Copolymerization reaction mixtures were formed by combining 1-dodecene and 9-DAME in molar percentages of from 95 to 25 mol% 1-dodecene, and from 5 to 75 mol% 9-DAME. In addition, a polymerization reaction mixture was formed by adding di-*t*-butyl peroxide to 9-DAME without any alpha-olefin comonomer. The amount of di-*t*-butyl peroxide polymerization initiator in each reaction was 8.3 - 8.4 mol%, and the reaction temperatures were from 150 - 155 °C. Table 12 lists the amount of each monomer, the amount of initiator, reaction yield, and kinematic viscosity (KV) at 100 °C for the polymerization and copolymerization reactions.

**Table 12: Copolymerizations of 1-dodecene and 9-DAME, and polymerization of 9-DAME**

| **1-Dodecene (monomer mol%)** | **9-DAME (monomer mol%)** | **di-*t*-butyl peroxide (mol%)** | **Yield (%)** | **KV at 100 °C (cSt)** |
|---|---|---|---|---|
| 95 | 5 | 8.4 | 70.0 | 22.30 |
| 90.9 | 9.1 | 8.4 | 69.9 | 21.73 |
| | | 8.3 | 73.2 | 22.51 |
| | | 8.3 | 72.1 | 21.75 |
| 85 | 15 | 8.4 | 69.0 | 20.91 |
| 75 | 25 | 8.4 | 70.5 | 20.77 |
| | | 8.3 | 72.8 | 21.38 |
| 65 | 35 | 8.4 | 69.7 | 19.99 |
| 50 | 50 | 8.4 | 70.7 | 20.34 |
| 25 | 75 | 8.4 | 73.0 | 21.49 |
| 0 | 100 | 8.4 | 74.1 | 23.17 |

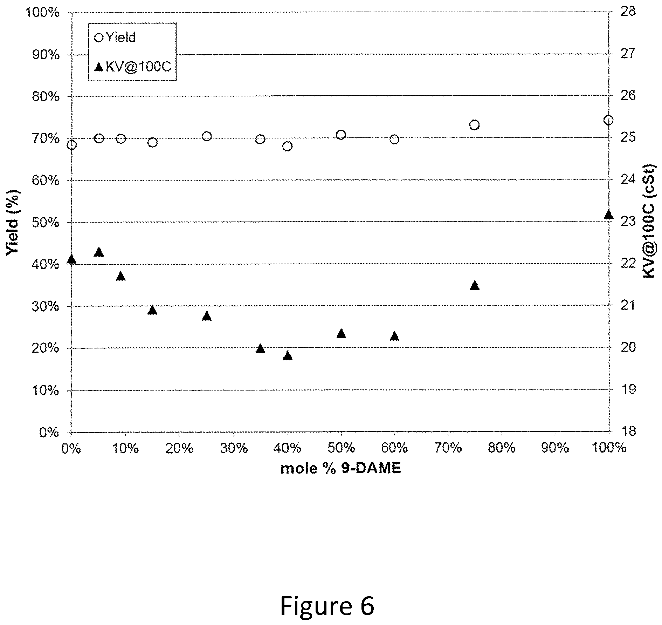

FIG. 6 is a graph of reaction yield and of copolymer viscosity as a function of 9-DAME monomer percentage for reactions with 8.4 mol% di-*t*-butyl peroxide, where the data points are from Table 12. The reaction yields were similar between the different reactions. The kinematic viscosity appeared to be lowest for copolymers formed from monomer mixtures containing from 25 to 50 mol% 9-DAME, with a minimum kinematic viscosity observed for the copolymer formed with 35 mol% 9-DAME. The viscosity index appeared to decrease with increasing 9-DAME levels. Table 13 lists the kinematic viscosity (KV) at 100 °C, the kinematic viscosity (KV) at 40 °C, and the viscosity index (VI) for the polymerization and copolymerization reactions corresponding to Table 12 entries for 95% 1-dodecene, 75% 1-dodecene (using 8.4 mol% peroxide), and 50%, 25% and 0% 1-dodecene, respectively.

**Table 13: Kinematic viscosities and viscosity indices of copolymers formed from 1-dodecene and 9-DAME, and of a polymer formed from 9-DAME**

| **1-dodecene / 9-DAME ratio** | **KV at 100 °C (cSt)** | **KV at 40 °C (cSt)** | **VI** |
|---|---|---|---|
| 19:1 | 22.30 | 157.70 | 169 |
| 3:1 | 20.77 | 146.90 | 165 |
| 1:1 | 20.34 | 141.46 | 167 |
| 1:3 | 21.49 | 159.49 | 160 |
| --* | 23.17 | 177.85 | 158 |

| | | | |
|---|---|---|---|
| * Polymerization of 9-DAME without 1-dodecene | | | |

Copolymers were formed by reacting 9-DAME and olefin compositions containing 1-dodecene in molar ratios of 1-dodecene to 9-DAME of approximately 10:1 and of 1:1. The olefin compositions included different combinations of isomers. Feedstock A included 95.4% 1-dodecene (*n*-isomer), 3.8% 2-methly-1-undecene (vinylidene isomer), and 0.15% 2-dodecene and other internal olefins. Feedstock B included a lower amount of 1-dodecene, containing 91.1% 1-dodecene, 7.2% 2-methly-1-undecene, and 1.7% 2-dodecene and other internal olefins. The amount of di-*t*-butyl peroxide initiator in each copolymerization reaction was 8.4 mol%, and the reaction temperature was 150 °C. Table 14 lists the olefin feedstock, the approximate molar ratio of the comonomers, reaction yield, and kinematic viscosity (KV) at 100 °C for the copolymerization reactions. The copolymers formed using an olefin feedstock having a higher level of non-alpha-olefin isomers had lower yields and lower kinematic viscosities at 100 °C.

**Table 14: Copolymerizations of 9-DAME with 1-dodecene from different olefin feedstocks**

| **Feedstock** | **^{~}1-dodecene / 9-DAME ratio** | **Yield (%)** | **KV at 100 °C (cSt)** |
|---|---|---|---|
| A | 10:1 | 70.5 | 21.90 |
| B | 10:1 | 64.5 | 18.17 |
| A | 3:1 | 70.5 | 20.77 |
| B | 3:1 | 67.5 | 18.35 |

### Example 9: Copolymerization of 1-dodecene and 9-DAME with chain transfer agents.

Copolymers were formed by reacting an alpha-olefin monomer (1-dodecene) and an α-ester-alk-ω-ene monomer (9-DAME) in a molar ratio of 10:1, using 8.3 mol% di-*t*-butyl peroxide polymerization initiator, and adding a thiol compound as a chain transfer agent. Table 15 lists the type and amount of chain transfer agent (CTA), reaction temperature, reaction yield, kinematic viscosity (KV) at 100 °C, and residual sulfur levels for the copolymerization reactions. The CTA mol% was calculated as the moles of chain transfer agent as a percentage of the total moles of monomer. The copolymers formed using 0.3 mol% t-nonyl thiol were isolated using two stripping procedures, due to an undesirable odor after the initial stripping.

**Table 15: Copolymerizations of 1-dodecene and 9-DAME with thiol-based chain transfer agents**

| **Chain transfer agent** | **CTA mol%** | **Reaction temp (°C)** | **Yield (%)** | **KV at 100 °C (cSt)** | **ppm Sulfur** |
|---|---|---|---|---|---|
| -- | 0 | 140 | 52.9 | 16.89 | <10 |
| stearyl thiol | 0.1 | 150 | 56.1 | 17.43 | 268 |
| dodecyl thiol | 0.3 | 140 | 47.2 | 12.91 | 1180 |
| | | 160 | 64.9 | 15.69 | 847 |
| *t*-nonyl thiol | 0.1 | 150 | 60.3 | 17.31 | 197 |
| | 0.3 | 140 | 35.6 | 12.03 | 1070 |
| | 0.3 | 160 | 49.8 | 12.88 | 927 |

Both yield and kinematic viscosity decreased with the use of these chain transfer agents. This viscosity was lower than what was previously obtained by lowering the amount of peroxide initiator or lowering the reaction temperature. Accordingly, the chain transfer agents appeared to promote chain transfer reactions in the copolymerizations, while maintaining desirably high levels of chain propagation and desirably low levels of chain termination. The copolymer molecular weights were reduced without lowering the overall monomer conversion.

Copolymers were formed by reacting 1-dodecene and 9-DAME in a molar ratio of 10:1, using 8.3 mol% di-t-butyl peroxide polymerization initiator, and adding 0.3 mol% of different chain transfer agents. The initiator was added in 1/10 aliquots every 30 minutes, and the reaction mixtures were stirred at 150 °C for 4 hours after completion of the initiator addition. Table 16 lists the type and amount of chain transfer agent (CTA), reaction temperature, reaction yield, kinematic viscosity (KV) at 100 °C, thermogravimetric (TGA) volatility, and residual sulfur levels for the copolymerization reactions.

**Table 16: Copolymerizations of 1-dodecene and 9-DAME with various chain transfer agents**

| **Chain transfer agent** | **CTA mo%** | **Yield (%)** | **KV at 100 °C (cSt)** | **TGA volatility (%)** | **Sulfur (ppm)** |
|---|---|---|---|---|---|
| -- | 0 | 70.55 | 21.90 | 5.2 | <10 |
| dodecyl thiol | 0.3 | 60.1 | 15.37 | 7.6 | 1000 |
| octyl thiol | 0.3 | 59.5 | 14.88 | 7.5 | -- |
| t-nonyl thiol | 0.3 | 47.5 | 11.28 | 8.1 | 1180 |
| BrCCl₃ | 0.3 | 50.7 | 11.31 | 7.4 | * |
| octyl bromide | 0.3 | 66.4 | 19.09 | 6.1 | -- |
| t-amyl bromide | 0.3 | 50.5 | 12.53 | 7.6 | -- |
| octyl alcohol | 0.3 | 70.5 | 21.70 | 5.2 | -- |
| t-amyl alcohol | 0.3 | 69.4 | 21.21 | 4.9 | -- |
| cyclohexadiene | 0.3 | 69.7 | 21.26 | 5.5 | -- |
| terpinolene | 0.3 | 68.3 | 20.73 | 5.4 | -- |
| γ-terpinene | 0.3 | 69.4 | 20.78 | 5.5 | -- |

| | | | | | |
|---|---|---|---|---|---|
| ^{∗} 3490 ppm Cl; 725 ppm Br. | | | | | |

Within the R-X series, chain transfer effectiveness increased in the series OH<Br<SH. Neither the primary nor tertiary alcohols showed chain transfer activity in these copolymerizations. The tertiary alkyl bromide showed greater activity than the primary alkyl bromide, and was comparable to the activity of the tertiary thiol and of BrCCl₃ in these copolymerizations. One side effect of using the tertiary bromide or the bromotrichloromethane, however, was that the copolymer had a golden yellow color.

Copolymers were formed by reacting 1-dodecene and 9-DAME in a molar ratio of 10:1, using either di-t-butyl peroxide or di-*t*-amyl peroxide as the polymerization initiator, and adding t-nonyl thiol as a chain transfer agent at loadings of 0, 0.1, 0.15 or 0.30 mol%. Table 17 lists the amount of *t*-nonyl thiol chain transfer agent (CTA), the type and amount of initiator, reaction temperature, reaction yield, and kinematic viscosity (KV) at 100 °C for the copolymerization reactions. In addition, the differences in the yield and in the kinematic viscosity between comparable copolymerization reactions that differed only in the presence of the chain transfer agent are listed in the table.

**Table 17: Copolymerizations of 1-dodecene and 9-DAME with and without t-nonyl thiol chain transfer agent**

| ***t*-nonyl thiol CTA (mol%)** | **Initiator (mol%)** | **Temp (°C)** | **Yield (%)** | **Yield difference** | **KV, 100 °C (cSt)** | **KV difference** |
|---|---|---|---|---|---|---|
| -- | di-*t*-butyl peroxide (8.3) | 150 | 70.5 | | 21.9 | |
| 0.10 | | 150 | 60.3 | 14%* | 17.31 | 4.59%* |
| 0.30 | | 155 | 47.5 | 23%* | 11.28 | 10.62%* |
| -- | di-*t*-butyl peroxide (4) | 155 | 44.2 | 18.1% | 15.61 | 7.83% |
| 0.15 | | | 26.1 | | 7.78 | |
| -- | di-*t*-butyl peroxide (7.4) | 150 | 78.3 | 18.1% | 15.81 | 4.03% |
| 0.15 | | | 60.2 | | 11.78 | |
| -- | di-*t*-amyl peroxide (8) | 150 | 78.3 | 25.5% | 15.81 | 6.45% |
| 0.3 | | | 52.8 | | 9.36 | |
| -- | di-*t*-amyl peroxide (4) | 150 | 49.0 | 18.8% | 13.79 | 3.92% |
| 0.15 | | | 30.2 | | 9.87 | |

| | | | | | | |
|---|---|---|---|---|---|---|
| * Difference relative to no t-nonyl thiol CTA. | | | | | | |

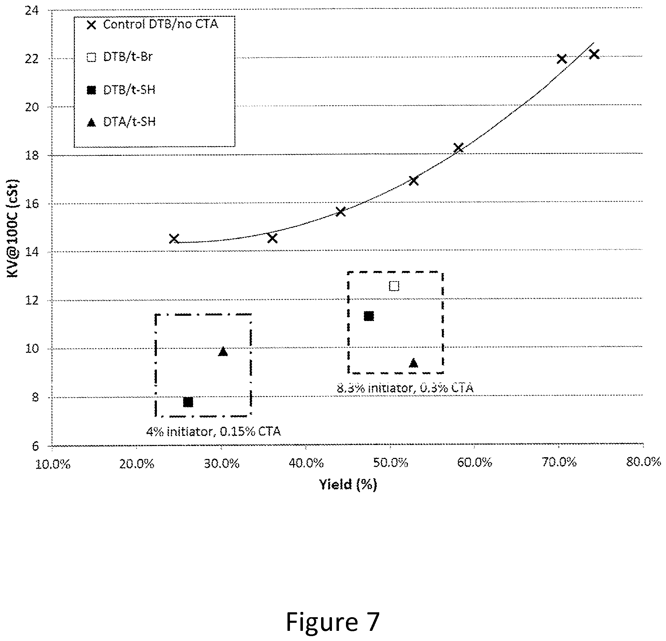

For copolymerizations using 8.3 mol% di-*t*-butyl peroxide, lowering the thiol content did not reduce the viscosity to 10 cSt or less. Similarly, the control reaction with lower (4 mol%) peroxide but no thiol CTA did not provide such a reduction in viscosity, although the copolymerization yield was lower. The copolymerization using both a lower loading of peroxide initiator and a lower loading of thiol CTA, however, provided a viscosity below 10 cSt. Substituting di-*t*-amyl peroxide as the initiator provided a higher yield and a lower copolymer viscosity than did the corresponding copolymerization with di-*t*-butyl peroxide. FIG. 7 is a graph of copolymer viscosity as a function of reaction yield, where the data points are from Table 17. The chain transfer agents highlighted in the graph may provide lower viscosities than what had previously been obtained for di-*t*-butyl peroxide initiated copolymerizations, while also providing acceptable reaction yields.

### Example 10: High viscosity lubricant compositions containing copolymerization products of 1-dodecene and 9-DAME - effect of stripping.

The viscosities of certain copolymers from Examples 4 and 8 were increased by one or more additional stripping procedures. The copolymers analyzed had been formed by reacting 1-dodecene and 9-DAME in a molar ratio of 3:1, using di-*t*-butyl peroxide as the polymerization initiator, at a reaction temperature of 155 °C. One copolymer corresponded to that listed in Table 12 of Example 8 as the entry for 75% 1-dodecene using 8.3 mol% peroxide. The other copolymer, corresponding to that listed in Table 7 of Example 4 as the 10^{th} entry, was formed using 13.7 mol% peroxide. Both copolymers had been stripped at 200 °C under a vacuum of 1 torr after their copolymerization reactions. The copolymer formed using the lower amount of 8.3 mol% peroxide was stripped at 250 °C under a vacuum of 0.25 torr, and then further stripped at 300 °C under a vacuum of 0.5 torr. The copolymer formed using the higher amount of 13.7 mol% peroxide was stripped at 250 °C under a vacuum of 0.25 torr. Table 18 lists the amount of initiator, copolymer yield, kinematic viscosity (KV) at 100 °C, kinematic viscosity (KV) at 40 °C, and viscosity index.

**Table 18: Change in yield, molecular weight and viscosity due to stripping of copolymers formed from a 3:1 molar ratio of 1-dodecene and 9-DAME**

| **Initiator (mol%)** | **Stripping** | **Yield (%)** | **Mₙ (PDI)** | **KV at 100 °C (cSt)** | **KV at 40 °C (cSt)** | **VI** |
|---|---|---|---|---|---|---|
| 8.3 | 200 °C; 1 torr | 72.8 | 1939 (1.65) | 21.38 | 152.56 | 165 |
| | 250 °C; 0.25 torr | 65.0* | -- | 28.29 | -- | -- |
| | 300 °C; 0.50 torr | -- | 3687 (1.15) | 26.52 | 215.57 | 157 |
| 13.7 | 200 °C; 1 torr | 90.6 | 2522 (1.89) | 38.93 | 319.54 | 174 |
| | 250 °C; 0.25 torr | 84.1* | 5946 (1.16) | 48.01 | 436.1 | 170 |

| | | | | | | |
|---|---|---|---|---|---|---|
| * Calculated based on weight loss from additional stripping. | | | | | | |

Subjecting the copolymer formed using the lower amount of 8.3 mol% peroxide to stripping at 250 °C under 0.25 torr increased the kinematic viscosity at 100 °C from 21.38 to 28.29 cSt. This supplemental stripping also reduced the overall yield from 72.8% to 65.0%. Further subjecting this copolymer to stripping at 300 °C under 0.50 torr, however, reduced the kinematic viscosity at 100 °C to 26.52 cSt. Subjecting the copolymer formed using the higher amount of 13.7 mol% peroxide to stripping at 250 °C under 0.25 torr increased the kinematic viscosity at 100 °C from 38.93 to 48.01 cSt. This supplemental stripping also reduced the overall yield from 90.6% to 84.1%.

Stripping the copolymers removed lower molecular weight fractions, which contributed to lower kinematic viscosity in the original copolymers. The kinematic viscosity at 100 °C was raised above 40 cSt with the high peroxide sample (13.7 mol% peroxide). Viscosity indices were somewhat reduced by the additional stripping, but remained relatively high.

Copolymers were formed by reacting 1-dodecene and 9-DAME in molar ratios of 9:1 or 3:1, using 8 mol% di-t-butyl peroxide as the polymerization initiator. After stripping at 200 °C under a vacuum of 1 torr, the resulting copolymers were analyzed with regard to molecular weight, kinematic viscosity at 40 °C and 100 °C, and viscosity index. The stripping process and analysis were repeated three times, at successively higher temperatures of 250 °C, 260 °C and 275 °C. Table 19 lists the comonomer ratio, stripping temperature, copolymer yield, molecular weight (Mₙ) and polydispersity (PDI), kinematic viscosity (KV) at 100 °C and 40 °C, and viscosity index.

**Table 19: Change in yield, molecular weight and viscosity properties due to stripping, of copolymers formed using 8 mol% di-t-butyl peroxide**

| **1-dodecene / 9-DAME ratio** | **Stripping Temp (°C)** | **Yield (%)** | **Mₙ (PDI)** | **KV at 100 °C (cSt)** | **KV at 40 °C (cSt)** | **VI** |
|---|---|---|---|---|---|---|
| 9:1 | 200 | 68.8 | 1696 (1.7) | 20.78 | 141.42 | 171 |
| | 250 | 62.6* | -- | 26.80 | 210.63 | 162 |
| | 260 | 61.2* | -- | 27.72 | -- | -- |
| | 275 | 59.3* | 2104 (1.5) | 29.10 | 245.70 | 156 |
| 3:1 | 200 | 68.6 | 1650 (1.7) | 19.72 | 137.33 | 165 |
| | 250 | 62.0^{∗} | -- | 25.15 | 201.51 | 156 |
| | 260 | 59.9* | -- | 26.89 | -- | -- |
| | 275 | 58.4* | 2047 (1.5) | 27.70 | 234.51 | 153 |

| | | | | | | |
|---|---|---|---|---|---|---|
| * Calculated based on weight loss from additional stripping. | | | | | | |

As the stripping temperature was raised, the molecular weight and kinematic viscosity of the copolymers increased, while the polydispersity and viscosity index decreased. Analysis of the distillates from each stripping process indicated that dimer and lower oligomers were removed from the copolymer, causing an increase in the average molecular weight of the copolymer and a narrowing of the polydispersity.

Copolymers were formed by reacting 1-dodecene and 9-DAME in molar ratios of 9:1, 3:1 or 1:1, using 11.3 mol% di-t-butyl peroxide as the polymerization initiator. This loading of peroxide initiator was selected as an intermediate loading between the 8 - 8.5 mol% peroxide and 13.7 mol% peroxide loadings used in the copolymerizations described above. As the 8 - 8.5 mol% and 13.7 mol% peroxide copolymerizations had provided 100 °C kinematic viscosities below 40 cSt and above 40 cSt, respectively, an intermediate peroxide loading was expected to provide a 100 °C kinematic viscosity closer to 40 cSt. The copolymerization products were stripped at 200 °C under a vacuum of 1 torr, and then analyzed with regard to molecular weight, kinematic viscosity at 40 °C and 100 °C, viscosity index and pour point. The stripping process and analysis were repeated twice, at successively higher temperatures of 250 °C and 275 °C. Table 20 lists the comonomer ratio, stripping temperature, copolymer yield, molecular weight (Mₙ) and polydispersity (PDI), kinematic viscosity (KV) at 100 °C and 40 °C, and viscosity index.

**Table 20: Change in yield, molecular weight and viscosity due to stripping of copolymers formed using 8 mol% di-t-butyl peroxide**

| **1-dodecene / 9-DAME ratio** | **Stripping Temp (°C)** | **Yield (%)** | **Mₙ (PDI)** | **KV at 100 °C (cSt)** | **KV at 40 °C (cSt)** | **VI** |
|---|---|---|---|---|---|---|
| 9:1 | 200 | 82.2 | 1834 (1.79) | 27.68 | 217.61 | 164 |
| | 250 | 76.5* | 2127 (1.61) | 32.42 | 297.71 | 157 |
| | 275 | 73.9* | 2224 (1.56) | 36.61 | 336.52 | 156 |
| 3:1 | 200 | 82.3 | 1800 (1.79) | 26.57 | 206.35 | 163 |
| | 250 | 75.7* | 2042 (1.63) | 33.91 | 299.29 | 154 |
| | 275 | 73.5* | 2134 (1.57) | 36.52 | 338.71 | 155 |
| 1:1 | 200 | 83.3 | 1736 (1.81) | 27.29 | 223.30 | 157 |
| | 250 | 76.6* | 1948 (1.68) | 34.92 | 319.08 | 152 |
| | 275 | -- | 1943 (1.67) | 33.85 | -- | -- |

| | | | | | | |
|---|---|---|---|---|---|---|
| * Calculated based on weight loss from additional stripping. | | | | | | |

As the stripping temperature was raised, the molecular weight and kinematic viscosity of the copolymers generally increased, while the polydispersity and viscosity index generally decreased. The kinematic viscosities at 100 °C were still below 40 cSt, however. The pour point was measured for the copolymers of entries 1, 2, 4 and 5 in Table 20, with values of -48 °C, -42 °C, -45 °C and -39 °C, respectively. Although the pour point increased as the stripping temperature was raised, all of the measured values were relatively low and were within the range of -22 °C to -47 °C typically observed for commercially available high-viscosity poly(alpha olefins).

### Example 11: High viscosity lubricant compositions containing copolymerization products of 1-dodecene and 9-DAME - effect of peroxide loading and reaction temperature.

Copolymers were formed by reacting an alpha-olefin monomer (1-dodecene) and an α-ester-alk-ω-ene monomer (9-DAME) in a molar ratio of 9:1, using 12 mol%, 14 mol% or 16 mol% di-t-butyl peroxide polymerization initiator, and reaction temperatures of 155 °C, 165 °C or 175 °C. The initiator was added in eight portions instead often, which decreased the reaction time by 1 hour. The copolymerization products were stripped at 200 °C under a vacuum of 1 torr, and then analyzed with regard to kinematic viscosity at 40 °C and 100 °C, and viscosity index. Table 21 lists the reaction temperature, peroxide loading, reaction yield, kinematic viscosity (KV) at 100 °C and at 40 °C, and viscosity index for the copolymerization reactions.

**Table 21: Effects of reaction temperature and di-t-butyl peroxide loading on yield and viscosity of copolymers formed from a 9:1 molar ratio of 1-dodecene and 9-DAME**

| **Reaction Temp (°C)** | **Initiator (mol%)** | **Yield (%)** | **KV at 100 °C (cSt)** | **KV at 40 °C (cSt)** | **VI** |
|---|---|---|---|---|---|
| 155 | 12 | 83.6 | 29.21 | 238.54 | 161 |
| | | 85.1 | 30.28 | 255.75 | 158 |
| | 14 | 89.9 | 38.85 | 349.14 | 162 |
| | 16 | 90.1 | 40.56 | 367.18 | 163 |
| | | 90.7 | 41.57 | 388.25 | 160 |
| 165 | 14 | 92.1 | 40.32 | 367.50 | 161 |
| | | 91.7 | 39.85 | 359.68 | 162 |
| 175 | 12 | 59.0 | 31.66 | 271.54 | 158 |
| | | 88.2 | 33.01 | 277.00 | 163 |
| | 16 | 95.0 | 53.74 | 520.57 | 167 |
| | | 95.7 | 55.85 | 550.81 | 167 |
| | | 94.6 | 54.29 | 522.43 | 169 |

Copolymers were formed by reacting 1-dodecene and 9-DAME in a different molar ratio of 4:1, using 13.4 mol% or 14.5 mol% di-*t*-butyl peroxide polymerization initiator, and reaction temperatures of 155 °C or 175 °C. The initiator was added in ten portions. The copolymerization products were stripped at 200 °C under a vacuum of 1 torr, and then analyzed with regard to kinematic viscosity at 40 °C and 100 °C, and viscosity index. Table 22 lists the reaction temperature, peroxide loading, reaction yield, kinematic viscosity (KV) at 100 °C and at 40 °C, and viscosity index for the copolymerization reactions.

**Table 22: Effects of reaction temperature and di-t-butyl peroxide loading on yield and viscosity of copolymers formed from a 4:1 molar ratio of 1-dodecene and 9-DAME**

| **Reaction Temp (°C)** | **Initiator (mol%)** | **Yield (%)** | **KV at 100 °C (cSt)** | **KV at 40 °C (cSt)** | **VI** |
|---|---|---|---|---|---|
| 155 | 14.5 | 90.8 | 40.36 | 365.11 | 161 |
| | | 91.9 | 40.20 | 367.11 | 161 |
| 175 | 13.4 | 91.3 | 35.64 | 318.16 | 158 |
| | | 91.1 | 35.19 | 306.76 | 161 |

Copolymers were formed by reacting 1-dodecene and 9-DAME in molar ratios of 9:1 or 4:1 at a reaction temperature of 175 °C, using from 13.5 mol% to 15 mol% di-*t-*butyl peroxide polymerization initiator. The copolymerization products were stripped at 200 °C under a vacuum of 1 torr, and then analyzed with regard to kinematic viscosity at 40 °C and 100 °C, and viscosity index. Table 23 lists the molar ratio of monomers, peroxide loading, reaction yield, kinematic viscosity (KV) at 100 °C and at 40 °C, and viscosity index for the copolymerization reactions.

The lower viscosities for the copolymers formed at the higher reaction temperature of 175 °C may have been a result of difficulties in maintaining this temperature throughout the reaction. The potential benefit of using less peroxide initiator at this higher temperature appeared to come at the expense of obtaining a high kinematic viscosity of 40 cSt. Copolymerizations using 14 mol% peroxide at 165 °C yielded copolymers having kinematic viscosity values of from 36.7 to 40.3 cSt (see Table 21, entries 6 and 7), while copolymerizations at 175 °C using the same amount of peroxide (14 mol%) yielded copolymers having lower kinematic viscosity values of from 37.3 to 38.3 cSt (Table 23, entries 3 and 4). The yields from these two types of copolymerization were similar, with the yield of the 14 mol% peroxide / 165 °C copolymerizations ranging from 90.8 - 92.1% and the yield of the 14 mol% peroxide / 175 °C combination ranging from 92.3 - 92.6%.

**Table 23: Effects of comonomer molar ratio and di-t-butyl peroxide loading on yield and viscosity of 1-dodecene / 9-DAME copolymers formed at 175 °C**

| **1-dodecene / 9-DAME ratio** | **Initiator (mol%)** | **Yield (%)** | **KV at 100 °C (cSt)** | **KV at 40 °C (cSt)** | **VI** |
|---|---|---|---|---|---|
| 9:1 | 13.7 | 91.1 | 38.40 | 337.63 | 164 |
| 4:1 | 13.5 | 91.1 | 36.62 | 316.81 | 164 |
| | 13.9 | 92.3 | 37.94 | 332.76 | 164 |
| | 14 | 92.3 | 37.35 | 328.70 | 162 |
| | | 92.56 | 38.32 | 338.52 | 163 |
| | 14.5 | 92.84 | 40.46 | 363.85 | 163 |
| | 15 | 94.0 | 44.92 | 413.28 | 165 |

### Example 12: High viscosity lubricant compositions containing copolymerization products of 1-dodecene and 9-DAME - effect of hydrogenation.

Copolymers were formed by reacting an alpha-olefin monomer (1-dodecene) and an α-ester-alk-ω-ene monomer (9-DAME) in molar ratios of 9:1 or 4:1, using from 14.3 to 14.5 mol% di-*t*-butyl peroxide polymerization initiator, and a reaction temperature of 165 °C. The copolymerization products were stripped and then analyzed with regard to molecular weight, kinematic viscosity at 40 °C and 100 °C, viscosity index, pour point and oxidation onset temperature (OOT; ASTM E2009). The 4:1 copolymerization yielded 92.0% of a copolymer having a number average molecular weight (Mₙ) of 2,498, with a polydispersity index (PDI) of 1.93; and the 9:1 copolymerization yielded 91.7% of a copolymer having a number average molecular weight (Mₙ) of 2,633, with a polydispersity index (PDI) of 1.87. The copolymers were then hydrogenated to remove carbon-carbon double bonds, and then similarly analyzed. Table 24 lists the ratio of monomers, peroxide loading, kinematic viscosity (KV) at 100 °C and at 40 °C, viscosity index, molecular weight, pour point and oxidation onset temperature (OOT) for the copolymers.

**Table 24: Effects of comonomer molar ratio and hydrogenation on viscosity and pour point of 1-dodecene / 9-DAME copolymers formed at 175 °C**

| **1-dodecene / 9-DAME ratio** | **Hydrogenated** | **KV (cSt)** | | **VI** | **Pour Point °C** | **OOT (°C)** |
|---|---|---|---|---|---|---|
| | | **100 °C** | **40 °C** | | | |
| 4:1 | No | 39.96 | 362.46 | 162 | -27 | 176.5 |
| | Yes | 41.16 | 375 | 163 | -21 | 201.4 |
| 9:1 | No | 40.10 | 359.09 | 163 | -30 | 170.6 |
| | Yes | 41.05 | 371 | 163 | -18 | 200.3 |

Viscosity and viscosity index were minimally affected by hydrogenation, but the pour point increased with hydrogenation. Hydrogenation improved oxidative stability of the copolymers as measured by OOT. When the non-hydrogenated copolymers were blended with 0.5% of a dialkyldiphenylamine antioxidant, the OOT increased to over 220 °C for each copolymer.

### Example 13: High viscosity lubricant compositions containing copolymerization products of 1-dodecene and 9-DAME - effect of higher peroxide loading and reaction temperature.

Copolymers were formed by reacting an alpha-olefin monomer (1-dodecene) and an α-ester-alk-ω-ene monomer (9-DAME) in a molar ratio of 1:1, using 14 - 20 mol% di-*t*-butyl peroxide polymerization initiator, and reaction temperatures of 155 °C or 165 °C. The copolymerization products were analyzed with regard to kinematic viscosity at 40 °C and 100 °C, and viscosity index. Table 25 lists the reaction temperature, peroxide loading, reaction yield, kinematic viscosity (KV) at 100 °C and at 40 °C, and viscosity index for the copolymerization reactions.

**Table 25: Effects of reaction temperature and di-t-butyl peroxide loading on viscosity of copolymers formed from a 1:1 molar ratio of 1-dodecene and 9-DAME**

| **Reaction Temp (°C)** | **Initiator (mol%)** | **Yield (%)** | **KV at 100 °C (cSt)** | **KV at 40 °C (cSt)** | **VI** |
|---|---|---|---|---|---|
| 155 | 14 | 92.52 | 38.35 | 351.19 | 159 |
| | 16 | 93.74 | 51.43 | 515.8 | 162 |
| | 16 | 94.07 | 55.52 | 568.3 | 163 |
| | 18 | 95.67 | 76.83 | 835.3 | 172 |
| | 19 | 96.92 | 96.77 | 1087.02 | 178 |
| | 20 | 97.47 | 150.36 | 1808.4 | 194 |
| 165 | 14 | 90.60 | 41.24 | 377.37 | 162 |
| | 16 | 95.81 | 55.59 | 559.8 | 166 |
| | 16 | 95.86 | 57.87 | 591.2 | 166 |
| | 18 | 97.37 | 87.24 | 954.8 | 177 |
| | 19 | 97.80 | 117.45 | 1352.82 | 185 |
| | 20 | 98.30 | 186.99 | 2207.0 | 207 |

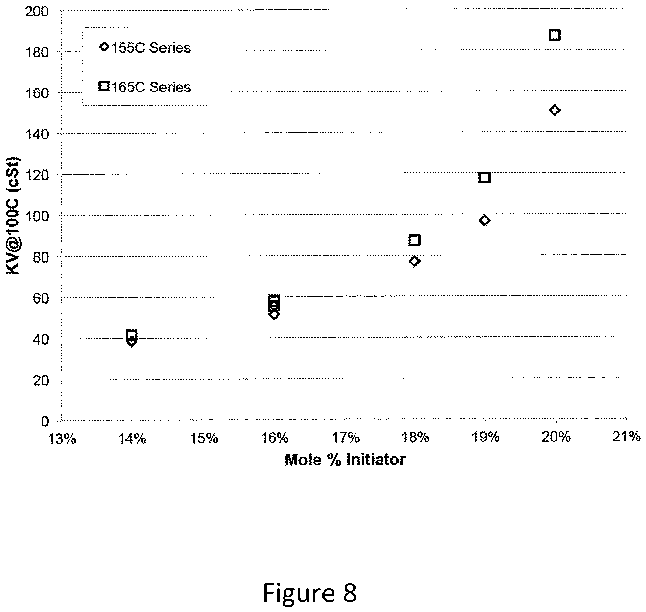

FIG. 8 is a graph of copolymer viscosity as a function of di-*t*-butyl peroxide loading, where the data points are from Table 25. The diamond symbols in the graph correspond to reaction temperatures of 155 °C, and the square symbols in the graph correspond to reaction temperatures of 165 °C. The kinematic viscosities at 100 °C of the polymers spanned 38 to 186 cSt, and generally increased with increasing initiator loading.

### Example 14: High viscosity lubricant compositions containing copolymerization products of 1-dodecene and 9-DAME - effect of two-stage copolymerization.

Copolymers were formed by reacting an alpha-olefin monomer (1-dodecene) and an α-ester-alk-ω-ene monomer (9-DAME) in a molar ratio of 1:1, using 8 mol% or 14 mol% di-*t*-butyl peroxide polymerization initiator and a reaction temperature of 155 °C. Portions of the copolymerization product from the 8 mol% initiator reaction were subjected to a second stage of copolymerization. In the second stage, the copolymerization product was combined with additional di-t-butyl peroxide polymerization initiator and heated at 165 °C. The additional initiator was added in four doses at 165 °C, and the mixture was then maintained at 165 °C for 4 hours. The amounts of di-*t*-butyl peroxide polymerization initiator used in the second stage copolymerizations were 11.3%, 22.4%, 33.7% or 44.9% of the amount used in the initial copolymerization, which used 8 mol%. Thus, the total amount of initiator used in the two-stage copolymerization in which the second stage used 44.9% of the amount of initiator of the initial copolymerization was equal to the amount of initiator present in the one-stage copolymerization that used 14 mol% initiator.

The copolymerization products, both from one-stage reactions and two-stage reactions, were analyzed with regard to kinematic viscosity at 40 °C and 100 °C, viscosity index and molecular weight. Table 26 lists the reaction conditions, reaction yield, kinematic viscosity (KV) at 100 °C and at 40 °C, viscosity index and molecular weight for the copolymerization reactions. The reaction yields for the two-stage reactions are overall yields for both stages, as yield for the second stages were approximately quantitative.

The two-stage reaction with the highest peroxide loading (A + 44.9% more initiator) gave a kinematic viscosity at 100 °C of 75.16 cSt, which was greater than that obtained using the same amount of initiator but in a one-stage reaction ("C"; kinematic viscosity at 100 °C = 38.35 cSt). Surprisingly, a viscosity approximately equal to that of this one-stage reaction was obtained by using only half the additional amount of initiator, which corresponds to the two-stage reaction identified as "A product + 11.3% more initiator" (kinematic viscosity at 100 °C = 38.23 cSt).

**Table 26: Effects of two-stage copolymerization on yield, viscosity and molecular weight of 1:1 1-dodecene / 9-DAME copolymers**

| **Description** | **Yield** | **KV (cSt)** | | **VI** | **Molecular weight (daltons)** | | **PDI** |
|---|---|---|---|---|---|---|---|
| | | **100 °C** | **40 °C** | | **Mₙ** | **M_{w}** | |
| 1-step "A"; 8 mol% initiator | 69.98 | 18.68 | 134.44 | 157 | 1579 | 3021 | 1.91 |
| 1-step control "C"; 14 mol% initiator | 92.52 | 38.35 | 351.19 | 159 | 2182 | 5383 | 2.47 |
| 2-step: A product + 11.3% more initiator | 69.89 | 25.13 | 199.60 | 158 | 1806 | 3912 | 2.17 |
| 2-step: A product + 22.4% more initiator | 69.95 | 38.23 | 342.50 | 161 | 2108 | 5508 | 3.14 |
| 2-step: A product + 33.7% more initiator | 69.98 | 54.07 | 527.85 | 167 | 2408 | 7569 | 3.14 |
| 2-step: A product + 44.9% more initiator | 69.93 | 75.16 | 792.29 | 173 | 2666 | 10332 | 3.88 |

The viscosities also were surprisingly high in view of the results of Example 13, above. The two-stage reaction identified as "A product + 33.7% more initiator" had a kinematic viscosity at 100 °C of 54.07 cSt. This viscosity was similar to those reported in Table 25 for the reactions that used 16 mol% initiator at 165 °C (kinematic viscosities at 100 °C = 55.59 and 57.87 cSt); however, the two-stage copolymerization used 16.4% less initiator than did the one-stage copolymerizations.

Surprisingly, viscosity index was not reduced in the copolymers formed using the two-stage copolymerizations. It is presently believed that volatility of the two-stage products should be less than that of the one-stage products, as low molecular weight species that remain after the first stage stripping are likely to react in the second stage.

### Example 15: High viscosity lubricant compositions containing copolymerization products of 1-dodecene and α-ester-alk-ω-enes having different ester groups.

Copolymers were formed by reacting an alpha-olefin monomer (1-dodecene) and an α-ester-alk-ω-ene monomer in a molar ratio of 4:1, using approximately 14 mol% di-*t*-butyl peroxide polymerization initiator and a reaction temperature of 155 °C. The ester group of the α-ester-alk-ω-ene monomer was either methyl (9-DAME), *n*-pentyl or 4-methyl butyl (isomer of *n*-pentyl). The copolymerization products were analyzed with regard to kinematic viscosity at 40 °C and 100 °C, and viscosity index. Table 27 lists the peroxide loading, reaction yield, kinematic viscosity (KV) at 100 °C and at 40 °C, and viscosity index for the copolymerization reactions.

**Table 27: Effects of ester structure on yield and viscosity of 1-dodecene / α-ester-alk-ω-ene copolymers**

| **Ester group** | **Initiator (mol%)** | **Yield (%)** | **KV at 100 °C (cSt)** | **KV at 40 °C (cSt)** | **VI** |
|---|---|---|---|---|---|
| methyl | 14.0 | 92.1 | 41.67 | 373.87 | 165 |
| | 14.5 | 94.0 | 44.93 | 413.28 | 165 |
| *n*-pentyl | 14.0 | 92.8 | 43.98 | 372.46 | 175 |
| 4-methyl butyl | 14.0 | 93.1 | 46.55 | 412.51 | 172 |

Surprisingly, the two copolymers formed using pentyl ester comonomers had higher kinematic viscosity (KV) at 100 °C and had higher viscosity indices than the control copolymer formed from 9-DAME comonomer using 14 mol% initiator. In addition, the *n-*pentyl ester comonomer surprisingly provided both a higher kinematic viscosity (KV) at 100 °C and a lower kinematic viscosity (KV) at 40 °C than the control copolymer. It may be desirable to affect viscosity index while only moderately affecting kinematic viscosity (KV) at 100 °C in lubricant compositions intended for use over a range of temperatures, such as automotive lubricants.

### Example 16: Low viscosity lubricant compositions formed by solution copolymerization.

Copolymers were formed by reacting an alpha-olefin monomer (1-dodecene) and an α-ester-alk-ω-ene monomer (9-DAME) in the presence of a solvent.

In a first set of copolymerizations, the solvent was decane. Monomer mixtures of 1-dodecene and 9-DAME in a 10:1 molar ratio were diluted with 25 -75 percent by volume (vol%) decane. A 500 mL 3-necked, round-bottom flask equipped with a magnetic stirrer, a N₂ inlet/outlet, a thermometer, a Dean-Stark trap (Note 1) and a condenser was charged with 1-dodecene, 9-DAME, di-t-butyl peroxide polymerization initiator, and decane. The monomer mixture was sparged with N₂ gas for 15 minutes. After sparging, the reaction mixture was heated to 150 °C. Once at temperature, a second portion of 1.1 mL of initiator was added by syringe. Every 30 minutes (for a total of 10 additions), another 1.1 mL of initiator was added (a total of 11 mL of initiator). After the addition of initiator was complete, the reaction mixture was stirred at 150 °C for 4 more hours, periodically removing the liquid collected in the trap. The reaction mixture was then allowed to cool to room temperature under nitrogen overnight. The clear product thus obtained was transferred to a short path distillation set-up and vacuum-stripped. The mixture was heated to 100 °C slowly under vacuum (2-10 torr), then heated slowly to 150 °C to remove the residual monomer. The pot residue was the desired product.

In a second set of copolymerizations, the solvent was PAO6, a branched isoparaffinic poly(alpha-olefin) having a kinematic viscosity at 100°C of 6 cSt. A 250mL 3-necked, round-bottom flask equipped with a magnetic stirrer, a N₂ inlet/outlet, a thermometer and a condenser was charged with 1-dodecene, 9-DAME and PAO6. The reaction mixture was sparged with nitrogen gas for 1 hour to overnight. After sparging, the monomer mixture was heated to 150 °C. Once at temperature, 0.62 mL of di-t-butyl peroxide polymerization initiator was added by syringe. Every 30 minutes following the initial addition of initiator, another 0.62 mL was added for 4.5 hours. After the addition of initiator was complete, the reaction mixture was stirred at 150 °C for 4 more hours, periodically removing the liquid collected in the trap. After 8.5 hours, the reaction mixture was allowed to cool to room temperature under nitrogen. The clear product thus obtained was transferred to a short path distillation set-up and vacuum-stripped. The mixture was heated to 200°C slowly under vacuum (2-10 torr) to remove the residual monomer. While warm (approximately 70-100 °C), the product was filtered using a medium coarseness paper filter or a coarse filter.

The copolymerization products were analyzed with regard to kinematic viscosity at 100 °C, and product yields. Table 28 lists the reactants, solvent, reaction yield, and kinematic viscosity (KV) at 100 °C for the copolymerization reactions.

**Table 28: Effects of solvent on yield and viscosity of 1-dodecene / 9-DAME copolymers**

| **1-dodecene / 9-DAME ratio** | **Initiator (mol%)** | **Solvent** | **Amount of solvent** | **Yield (%)** | **KV at 100 °C (cSt)** |
|---|---|---|---|---|---|
| 10:1 | 9.1 | -- | -- | 79 | 28 |
| 10:1 | 9.1 | decane | 25 vol% | 68 | 16 |
| | | | 40 vol% | 76 | 12.2 |
| | | | 75 vol% | 77 | 9.1 |
| | | | 75 vol% | 78 | 8.75 |
| 5:2 | 8.5 | PAO6 | 30 wt% | 64 | 9.96 |
| 4:3 | | | 30 wt% | 76 | 12.3 |
| 4:3 | | | 40 wt% | 71 | 9.11 |

In the copolymerizations using decane as the solvent, the less concentrated reaction mixtures provided higher comonomer conversions and also lower viscosities than comparable copolymerizations performed neat. Surprisingly, a yield of 78% was obtained in the copolymerization using 75 vol% decane, and the kinematic viscosity at 100°C was below 10 cSt. In the copolymerizations using PAO6 as the solvent, dilutions of 30 to 36 wt% provided kinematic viscosities at 100°C of approximately 10 cSt, particularly when the amount of 9-DAME is lower.

## Claims

1. A lubricant composition, comprising:
a copolymer comprising constitutional units formed from monomers comprising 1-dodecene, and
an α-ester-alk-ω-ene molecule wherein the mole to mole ratio of 1-dodecene to α-ester-alk-ω-ene molecule is 10:1; and
a second alpha-olefin having from 8 to 16 carbon atoms;
wherein the mole-to-mole ratio of 1-dodecene to the second alpha-olefin is at least 2:1 ; and
where the composition has a kinematic viscosity at 100 °C of from 5 to 20 centistokes.

2. The lubricant composition of claim 1, where the α-ester-alk-ω-ene molecule comprises 9-decenoic acid methyl ester.

3. The lubricant composition of claim 1, where the α-ester-alk-ω-ene molecule is selected from the group consisting of 9-decenoic acid methyl ester, 9-decenoic acid ethyl ester, 9-decenoic acid propyl ester, 10-undecenoic acid methyl ester,
10-undecenoic acid ethyl ester, 10-undecenoic acid propyl ester, 11-dodecenoic acid methyl ester, 11-dodecenoic acid ethyl ester, and 11-dodecenoic acid propyl ester.

4. The lubricant composition of claim 1, where the monomers further comprise at least one unsaturated monomer selected from the group consisting of ethylene, a styrene, a halogenated vinyl compound, an acrylate, an acrylamide, acrylonitrile,
*N*-vinyl pyrrolidone; an alpha-alkenol, an alpha-alkenyl acetate, an alpha-alkenyl halide, allyl cyclohexane, allyl cyclopentane, and substituted derivatives thereof.

5. The lubricant composition of claim 1, where the composition further comprises at most 50 wt% of a lubricant additive.

6. The lubricant composition of claim 1, where the composition has a kinematic viscosity at 100 °C of from 10 to 15 centistokes.

7. A method of forming a lubricant composition, comprising:
forming a reaction mixture comprising
a first monomer comprising 1-dodecene, and
a second monomer comprising an α-ester-alk-ω-ene molecule, wherein the mole ratio of 1-dodecene to α-ester-alk-ω-ene molecule is 10:1 and
a second alpha-olefin having from 8 to 16 carbon atoms wherein the mole-to-mole ratio of 1-dodecene to the second alpha-olefin is at least 2:1; and
a free radical initiator;
forming a product mixture comprising a copolymer comprising constitutional units formed from the monomers;
wherein the composition has a kinematic viscosity at 100 °C of from 5 to 20 centistokes.

8. The method of claim 7, where the free radical initiator is di-*t*-amyl peroxide.

9. The method of claim 7, where the reaction mixture further comprises a chain-transfer agent selected from a thiol compound and a halide compound.

## Patentansprüche

1. Eine Schmiermittelzusammensetzung, die Folgendes beinhaltet:
ein Copolymer, das Strukturbausteine beinhaltet, die aus Monomeren gebildet sind, die Folgendes beinhalten:
1-Dodecen, und
ein *α*-Ester-Alk-*ω*-en-Molekül, wobei das Mol-zu-Mol-Verhältnis von 1-Dodecen zum *α*-Ester-Alk-*ω*-en-Molekül 10:1 beträgt; und
ein zweites Alpha-Olefin mit 8 bis 16 Kohlenstoffatomen;
wobei das Mol-zu-Mol-Verhältnis von 1-Dodecen zum zweiten Alpha-Olefin mindestens 2 : 1 beträgt; und
wobei die Zusammensetzung eine kinematische Viskosität bei 100 °C von 5 bis 20 Centistokes aufweist.

2. Schmiermittelzusammensetzung gemäß Anspruch 1, wobei das *α*-Ester-Alk-*ω*-en-Molekül 9-Decensäure-Methylester beinhaltet.

3. Schmiermittelzusammensetzung gemäß Anspruch 1, wobei das *α*-Ester-Alk-*ω*-en-Molekül aus der Gruppe ausgewählt ist, die aus Folgendem besteht: 9-Decensäure-Methylester, 9-Decensäure-Ethylester, 9-Decensäure-Propylester, 10-Undecensäure-Methylester, 10-Undecensäure-Ethylester, 10-Undecensäure-Propylester, 11-Dodecensäure-Methylester, 11-Dodecensäure-Ethylester und 11-Dodecensäure-Propylester.

4. Schmiermittelzusammensetzung gemäß Anspruch 1, wobei die Monomere ferner mindestens ein ungesättigtes Monomer beinhalten, das aus der Gruppe ausgewählt ist, die aus Folgendem besteht: Ethylen, einem Styrol, einer halogenierten Vinyl-Verbindung, einem Acrylat, einem Acrylamid , einem Acrylnitril, *N*-Vinylpyrrolidon; einem Alpha-Alkenol, einem Alpha-Alkenyl-Azetat, einem Alpha-Alkenyl-Halogenid, Allylcyclohexan, Allylcyclopentan und substituierten Derivaten davon.

5. Schmiermittelzusammensetzung gemäß Anspruch 1, wobei die Zusammensetzung ferner zu höchstens 50 Gew.-% ein Schmiermitteladditiv beinhaltet.

6. Schmiermittelzusammensetzung gemäß Anspruch 1, wobei die Zusammensetzung eine kinematische Viskosität bei 100 °C von 10 bis 15 Centistokes aufweist.

7. Ein Verfahren zum Bilden einer Schmiermittelzusammensetzung, das Folgendes beinhaltet:
Bilden einer Reaktionsmischung, die Folgendes beinhaltet:
ein erstes Monomer, das 1-Dodecen beinhaltet, und
ein zweites Monomer, das ein α-Ester-Alk-*ω*-en-Molekül beinhaltet, wobei das Molverhältnis von 1-Dodecen zu *α*-Ester-Alk-*ω*-en-Molekül 10:1 beträgt; und
ein zweites Alpha-Olefin mit 8 bis 16 Kohlenstoffatomen, wobei das Mol-zu-Mol-Verhältnis von 1-Dodecen zum zweiten Alpha-Olefin mindestens 2 : 1 beträgt; und
einen Radikalinitiator.
Bilden einer Produktmischung, die ein Copolymer beinhaltet, das Strukturbausteine beinhaltet, die aus den Monomeren gebildet sind;
wobei die Zusammensetzung eine kinematische Viskosität bei 100 °C von 5 bis 20 Centistokes aufweist.

8. Verfahren gemäß Anspruch 7, wobei der Radikalinitiator Di-f-amylperoxid ist.

9. Verfahren gemäß Anspruch 7, wobei die Reaktionsmischung ferner einen Kettenüberträger beinhaltet, der aus einer Thiolverbindung und einer Halogenidverbindung ausgewählt ist.

## Revendications

1. Une composition de lubrifiant, comprenant :
un copolymère comprenant des unités constitutives formées à partir de monomères comprenant
du 1-dodécène, et
une molécule d'*α*-ester-alk-*ω*-ène dans laquelle le rapport molaire du 1-dodécène à la molécule d'*α*-ester-alk-*ω*-ène est de 10:1 ; et
une deuxième alpha-oléfine ayant de 8 à 16 atomes de carbone ;
dans laquelle le rapport molaire du 1-dodécène à la deuxième alpha-oléfine est au moins de 2:1 ; et
où la composition a une viscosité cinématique à 100 °C allant de 5 à 20 centistokes.

2. La composition de lubrifiant de la revendication 1, où la molécule d'*α*-ester-alk-*ω*-ène comprend l'ester méthylique de l'acide 9-décénoïque.

3. La composition de lubrifiant de la revendication 1, où la molécule d'*α*-ester-alk-*ω*-ène est sélectionnée dans le groupe constitué de l'ester méthylique de l'acide 9-décénoïque, de l'ester éthylique de l'acide 9-décénoïque, de l'ester propylique de l'acide 9-décénoïque, de l'ester méthylique de l'acide 10-undécénoïque, de l'ester éthylique de l'acide 10-undécénoïque, de l'ester propylique de l'acide 10-undécénoïque, de l'ester méthylique de l'acide 11-dodécénoïque, de l'ester éthylique de l'acide 11-dodécénoïque, et de l'ester propylique de l'acide 11-dodécénoïque.

4. La composition de lubrifiant de la revendication 1, où les monomères comprennent en sus au moins un monomère insaturé sélectionné dans le groupe constitué de l'éthylène, d'un styrène, d'un composé vinylique halogéné, d'un acrylate, d'un acrylamide, d'acrylonitrile, de *N*-vinyl pyrrolidone ; d'un alpha-alcénol, d'un acétate d'alpha-alcényle, d'un halogénure d'alpha-alcényle, d'allylcyclohexane, d'allylcyclopentane, et de dérivés substitués de ceux-ci.

5. La composition de lubrifiant de la revendication 1, la composition comprenant en sus 50 % en poids au plus d'un additif pour lubrifiant.

6. La composition de lubrifiant de la revendication 1, la composition ayant une viscosité cinématique à 100 °C allant de 10 à 15 centistokes.

7. Une procédé pour former une composition de lubrifiant, comprenant :
le fait de former un mélange réactionnel comprenant
un premier monomère comprenant du 1-dodécène, et
un deuxième monomère comprenant une molécule d'*α*-ester-alk-*ω*-ène, dans lequel le rapport molaire du 1-dodécène à la molécule d'*α*-ester-alk-*ω*-ène est de 10:1 et
une deuxième alpha-oléfine ayant de 8 à 16 atomes de carbone, dans lequel le rapport molaire du 1-dodécène à la deuxième alpha-oléfine est au moins de 2:1 ; et
un initiateur de radicaux libres ;
le fait de former un mélange de produits comprenant un copolymère comprenant des unités constitutives formées à partir des monomères ;
dans lequel la composition a une viscosité cinématique à 100 °C allant de 5 à 20 centistokes.

8. Le procédé de la revendication 7, où l'initiateur de radicaux libres est le peroxyde de di-*t*-amyle.

9. Le procédé de la revendication 7, dans lequel le mélange réactionnel comprend en sus un agent de transfert de chaîne sélectionné parmi un composé thiol et un composé halogénure.
